(19) Europäisches Patentamt
European Patent Office
Office européen des brevets

(11) **EP 4 545 920 A1**

(12) **EUROPEAN PATENT APPLICATION**

(43) Date of publication:
**30.04.2025 Bulletin 2025/18**

(21) Application number: **23205223.3**

(22) Date of filing: **23.10.2023**

(51) International Patent Classification (IPC):
**G01J 3/02** (2006.01)   **G01J 3/28** (2006.01)
**G01J 3/42** (2006.01)   **G01N 21/47** (2006.01)

(52) Cooperative Patent Classification (CPC):
**G01J 3/0256; G01J 3/0205; G01J 3/0272;
G01J 3/2803; G01J 3/42; G01N 21/4738**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **trinamiX GmbH
67063 Ludwigshafen am Rhein (DE)**

(72) Inventors:
• **Sheeran, Bridget
67059 Ludwigshafen am Rhein (DE)**
• **Schmidt, Felix
67059 Ludwigshafen am Rhein (DE)**
• **Zimmermann, Henning
67056 Ludwigshafen am Rhein (DE)**
• **Lehnert, Tibor Peter
67059 Ludwigshafen am Rhein (DE)**

(74) Representative: **Altmann Stößel Dick
Patentanwälte PartG mbB
Theodor-Heuss-Anlage 2
68165 Mannheim (DE)**

(54) **MINIATURE NIR SPECTROMETER WITH WEDGED MODULE WINDOW**

(57)    The present invention relates to a spectrometer device (130) for obtaining at least one item of spectral information on at least one object (110) by spectral measurement, wherein the spectrometer device (130) comprises:

(1) at least one sample interface (132), wherein the sample interface (132) defines a measurement surface, wherein the measurement surface is configured for defining a measurement pose of the object (110), particularly during the spectral measurement;

(2) at least one light emitting element (138), wherein the light emitting element (138) is configured for emitting illumination light (140) for illuminating the at least one object (110) in order to generate detection light (142) from the at least one object (110);

(3) at least one detector (144), wherein the detector (144) is configured for generating at least one detector (144) signal when receiving the detection light (142) from the object (110) in order to acquire the item of spectral information;

(4) at least one spectrometer window (130), wherein the detection light (142) and the illumination are is transmitted through the spectrometer window (130), wherein spectrometer window (130) comprises an outer surface (148) that is facing the outside of the spectrometer device (130); wherein the spectrometer window (130) further comprises an inner surface (150) that facing the inside of the spectrometer device (130), wherein the outer surface (148) is opposite of the inner surface (150), wherein a normal of the outer surface (148) and a normal of the inner surface (150) are tilted.

FIG.4

EP 4 545 920 A1

## Description

Technical Field

The invention relates to a spectrometer device for obtaining at least one item of spectral information, a mobile device and a method for operating a spectrometer device for obtaining spectral information. The methods and devices according to the present invention specifically may be employed for example in various areas of daily life, security technology, gaming, traffic technology, production technology, photography such as digital photography or video photography for arts, documentation or technical purposes, safety technology, information technology, agriculture, crop protection, maintenance, cosmetics, medical technology or in the sciences. However, other applications are also possible.

Background art

Spectrometer devices are, typically, used for obtaining at least one item of spectral information on an object, such as a measurement object. For obtaining the item of spectral information, the object may be illuminated with illumination light in a manner that the object generates detection light. The received detection light may then be analyzed for obtaining the spectral information.

At large angles the amount of reflected detection light from the object may be low, particularly for Lambertian type of objects. In case of a limited height of the spectrometer device, the optical path may require light collection under large angles between the illumination light and reflected detection light. In order to avoid Fresnel specular reflections, the maximum extend of the angular distribution of the illumination light on the sample interface may provide a lower limit on the collection of light from the sample interface.

Problem to be solved

It is therefore desirable to provide methods and devices, which at least partially address the above-mentioned technical challenges and at least substantially avoid the disadvantages of known methods and devices.

In particular, it is an object of the present invention to improve the detection efficiency of a spectrometer device. It may further be an object of the present invention to improve the signal-to-noise ratio of the spectrometer device. It may further be an object of the present invention to decrease the amount of light collection of large angles between the illumination light and reflected detection light. It may further be an object of the present invention to improve the tolerance of the spectrometer device to the position of the object. It may further be an object of the present invention to increase the dynamic range of the spectrometer device. It may further be an object of the present invention to improve the spectral contrast and/or reduce the stray light.

Summary

This problem is, particularly, addressed by the spectrometer device for obtaining at least one item of spectral information, the mobile device and the method for operating a spectrometer device for obtaining spectral information described by the features of the independent claims. Advantageous embodiments which might be realized in an isolated fashion or in any arbitrary combinations are listed in the dependent claims as well as throughout the specification.

In a first aspect, a spectrometer device for obtaining at least one item of spectral information on at least one object by spectral measurement is disclosed. For this aspect, reference may be made to any definition, Embodiment, claim and/or aspect as disclosed herein.

The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

The term "spectral information", also referred to as "spectroscopic information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

The "object" may, generally, be an arbitrary body, chosen from a living object and a non-living object. Thus, as an example, the at least one object may comprise one or more articles and/or one or more parts of an article, wherein the at least one article or the at least one part thereof may comprise at least one component which may provide a spectrum suitable for investigations. Additionally or alternatively, the object may be or may comprise one or more living beings and/or one or more parts thereof, such as one or more body parts of a human being, e.g. a user, and/or an animal.

The spectrometer device comprises:

(1) at least one sample interface, wherein the sample interface defines a measurement surface, wherein the measurement surface is configured for defining a measurement pose of the object, particularly during the spectral measurement, particularly wherein the measurement surface further defines an x-y-plane and, thereby, defines an x-axis and a y-axis;
(2) at least one light emitting element, wherein the light emitting element is configured for emitting illumination light for illuminating the at least one object in order to generate detection light from the at least one object;
(3) at least one detector, wherein the detector is configured for generating at least one detector signal when receiving the detection light from the object in order to acquire the item of spectral information;
(4) at least one spectrometer window, wherein the detection light and the illumination light are transmitted through the spectrometer window, wherein spectrometer window comprises an outer surface that is facing the outside of the spectrometer device; wherein the spectrometer window further comprises an inner surface that facing the inside of the spectrometer device, wherein the outer surface is opposite of the inner surface, wherein a normal of the outer surface and a normal of the inner surface are tilted, particularly to each other.

As already disclosed, the spectrometer device comprises at least one sample interface, wherein the sample interface defines a measurement surface, wherein the measurement surface is configured for defining a measurement pose of the object, particularly during the spectral measurement, particularly wherein the measurement surface further defines an x-y- plane and, thereby, defines an x-axis and a y-axis.

The term "sample interface" as used herein is a broad term and is to be given its ordinary and customary meaning to a person of ordinary skill in the art and is not to be limited to a special or customized meaning. The term specifically may refer, without limitation, to an arbitrary surface, such as measurement surface, at which an object is intended to interact with an optical measurement system, such as the spectrometer device. The measurement surface may be a measurement plane. For interacting with the object, the spectrometer device may emit the illumination light, particularly in a manner that the object generates the detection light. In addition, the spectrometer may receive the detection light. Particularly to allow the interaction with the object as intended, the sample interface may define a measurement pose of the object. When the object assumes the measurement pose, particularly as defined by the sample interface, at least one of: receiving the illumination light by the object and, thereby, generating the detection light is performed in a manner as intended, such as that when the object assumes the measurement pose, the signal-to-noise ratio of the spectrometer device is minimized.

For defining the x-axis and the y-axis, the sample interface may define a measurement surface, particularly at which an interaction between the object and the spectrometer device is intended to happen. The measurement surface may define an x-y-plane and, thereby, define the x-axis and the y-axis.

The sample interface may be an abstract element and may not require a structural feature, such as when the sample interface is a region, in the environment of the spectrometer device. Alternatively, a device window, particularly an outer surface of the device window, of a device that is further comprising the spectrometer device may be used as the sample interface. Further, the spectrometer comprises a spectrometer window. The outer surface of the spectrometer window may be configured for being in contact with the object during the spectral measurement and, thereby, being used as the sample interface.

The term "measurement pose" as used herein is a broad term and is to be given its ordinary and customary meaning to a person of ordinary skill in the art and is not to be limited to a special or customized meaning. The term specifically may refer, without limitation, to a relative position and/or orientation of the object relative to the sample interface, which is intended to be assumed during the spectral measurement, particularly to allow an interaction between the spectrometer device and the object as intended, such as intended by the setup and/or arrangement of the components of the spectrometer device.

As already disclosed, the spectrometer device comprises at least one light emitting element, wherein the light emitting element is configured for emitting illumination light for illuminating the at least one object in order to generate detection light from the at least one object.

As further used herein, the term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 $\mu$m, wherein the range of 760 nm to 1.5 $\mu$m is usually denominated as "near infrared spectral range" (NIR) while the range from 1.5 $\mu$ to 15 $\mu$m is denoted as "mid infrared spectral range" (MidIR) and the range from 15 $\mu$m to 1000 $\mu$m as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 $\mu$m to 5 $\mu$m, preferably of 1 $\mu$m to 3 $\mu$m. This is due to the fact that many material properties or properties on the chemical constitution of many objects may be derived from the near infrared spectral range. It shall be noted, however, that spectroscopy in other spectral ranges is also feasible and within the scope of the present invention.

Consequently, the term "light emitting element", also referred to as an "illumination source", as used herein is a broad term and is to be given its ordinary and customary meaning to a person of ordinary skill in the art and is not to be limited to a special or customized meaning. The term specifically may refer, without limitation, to an arbitrary device configured for generating or providing light, specifically "illumination light" in the sense of the above-mentioned definition for the term "light". The light emitting element specifically may be or may comprise at least one electrical light source.

As further used herein, the term "detection light" as used herein is a broad term and is to be given its ordinary and customary meaning to a person of ordinary skill in the art and is not to be limited to a special or customized meaning. The term specifically may refer, without limitation, to light that is generated by the object, particularly generated in an interaction of the illumination light with the object, such as scattering, reflecting and/or transmitting. The detection light may be illumination light that is reflected and/or scattered back through the sample interface to the at least one detector. At least a portion of the illumination light may be transmitted and/or absorbed by the object in a manner that it is not detected by the at least one detector.

The light emitting element may be a thermal radiator. The thermal radiator may be selected from an incandescent lamp or a thermal infrared emitter. The term "incandescent lamp" as used herein is a broad term and is to be given its ordinary and customary meaning to a person of ordinary skill in the art and is not to be limited to a special or customized meaning. The term specifically may refer, without limitation, to an electric light having a heatable element, such as a wire filament heated, which is capable of being heated to a temperature at which it emits light, especially infrared light. Since the incandescent lamp can, therefore, be considered as a thermal emitter within the infrared spectral range, an emission power of the incandescent lamp decreases with increasing wavelength. The thermal radiator may be selected from an incandescent lamp or a thermal infrared emitter. The term "thermal infrared emitter" as used herein is a broad term and is to be given its ordinary and customary meaning to a person of ordinary skill in the art and is not to be limited to a special or customized meaning. The term specifically may refer, without limitation, to a micro-machined thermally emitting device, which comprises a radiation emitting surface as the light emitting element that emits the optical radiation to be monitored.

Alternatively or in addition, the light emitting element may be a microelectromechanical system (MEMS)-based emitter. The term "microelectromechanical system (MEMS)-based emitter" as used herein is a broad term and is to be given its ordinary and customary meaning to a person of ordinary skill in the art and is not to be limited to a special or customized meaning. The term specifically may refer, without limitation, to an arbitrary apparatus configured for generating and/or emitting light comprising at least one element, wherein the element is associated with MEMS technology. MEMS technology, typically, involves the manufacture of mechanical and/or electrical elements on a microscale, typically below 1 $\mu$m or 100 $\mu$m or 1 mm or 5 mm or 50 mm.

Alternatively or in addition, the light emitting element may be a laser, specifically a vertical cavity surface emitting laser (VCSEL), particularly emitting at least one wavelength in the infrared region.

The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. VCSELs are generally known to the skilled person such as from WO 2017/222618 A.

Alternatively or in addition, the radiation emitting element may be a light-emitting diode (LED), specifically a LED emitting light that is at least partially located in the infrared spectral range. Alternatively or in addition, a LED emitting light that is illuminating a luminescent material, specifically a phosphor, for light-conversion of light generated by the LED, wherein the luminescent material generates converted light that is at least partly located in the near-infrared spectral range.

The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD) In the following, without narrowing the possible embodiments of the light-emitting diode to any of the before-mentioned physical principles or setups, the abbreviation "LED" will be used for any type of light-emitting diode.

Specifically, the LED may comprise at least two layers of semiconductor material, wherein light may be generated at at least one interface between the at least two layers of semiconductor material, specifically due to a recombination of positive and negative electrical charges, e.g. due to electron-hole recombination. The at least two layers of semiconductor material may have differing electrical properties, such as at least one of the layers being an n-doped semiconductor material and at least one of the layers being a p-doped semiconductor material. Thus, as an example, the LED may comprise at least one pn-junction and/or at least one pin-set up. It shall be noted, however, that other device structures are feasible, too. The at least one semiconductor material may specifically be or may comprise at least one inorganic semiconducting material. It shall be noted, however, that organic semiconducting materials may be used additionally or alternatively.

Generally, the LED may convert electrical current into light, specifically light that is at least partially located in the infrared spectral range. Alternatively or in addition, LED may convert electrical current into light into primary light, more specifically into blue primary light. The LED, thus, specifically may be a blue LED. The LED may be configured for generating the primary light, particularly for the light-conversion in the phosphor, also referred to as the "pump light". Thus, the LED may also be referred to as the "pump LED". The LED specifically may comprise at least one LED chip and/or at least one LED die. Thus, the semiconductor element of the LED may comprise an LED bare chip.

The term "luminescence" as used herein is a broad term and is to be given its ordinary and customary meaning to a person of ordinary skill in the art and is not to be limited to a special or customized meaning. The term specifically may refer, without limitation, to the process of spontaneous emission of light by a substance not resulting from heat. Specifically, luminescence may refer to a cold-body radiation. More specifically, the luminescence may be initiated or excited by irradiation of light, in which case the luminescence is also referred to as "photoluminescence". The property of a material being capable of performing luminescence, in the context of the present invention, is referred to by the adjective "luminescent". The at least one luminescent material specifically may be a photoluminescent material, i.e. a material which is capable of emitting light after absorption of photons or excitation light. Specifically, the luminescent material may have a positive Stokes shift, which generally may refer to the fact that the secondary light is red-shifted with respect to the primary light.

The at least one luminescent material, thus, may form at least one converter, also referred to as a light converter, transforming primary light into secondary light having different spectral properties as compared to the primary light. Specifically, a spectral width of the secondary light may be larger than a spectral width of the primary light, and/or a center of emission of the secondary light may be shifted, specifically red-shifted, compared to the primary light. Specifically, the at least one luminescent material may have an absorption in the ultraviolet and/or blue spectral range and an emission in the near-infrared and/or infrared spectral range. Thus, generally, the luminescent material or converter may form at least one component of the phosphor LED converging primary light or pump light, specifically in the blue spectral range, into light having a longer wavelength, e.g. in the near-infrared or infrared spectral range.

The luminescent material, specifically, may, thus, form at least one converter or light converter. The luminescent material may form at least one of a converter platelet, a luminescent and specifically a fluorescent coating on the LED and phosphor coating on the LED. The luminescent material may, as an example, comprise one or more of the following materials: Cerium-doped YAG (YAG:$Ce^{3+}$, or $Y_3Al_5O_{12}$:$Ce^{3+}$); rare-earth-doped Sialons; copper- and aluminium-doped zinc sulfide (ZnS:Cu,Al).

The LED and the luminescent material, together, may form a so-called "phosphor LED". Consequently, the term "phosphor light-emitting diode" or briefly "phosphor LED", as used herein, is a broad term and is to be given its ordinary and customary meaning to a person of ordinary skill in the art and is not to be limited to a special or customized meaning. The term specifically may refer, without limitation, to a combination of at least one light-emitting diode configured for generating primary light or pump light, and at least one luminescent material, also referred to as a "phosphor", configured for light-conversion of the primary light generated by the light-emitting diode. The phosphor LED may form a packaged LED light source, including the LED die, e.g. a blue LED emitting blue pump light, as well as the phosphor, which, as an example, fully or partially coats the LED, which is, as an example, configured for converting the primary light or blue light into light having differing spectral properties, specifically into near-infrared light. Generally, the phosphor LED may be packaged in one housing or may be unpackaged. Thus, the LED and the at least one luminescent material for light-conversion of the primary light generated by the light-emitting diode may specifically be housed in a common housing. Alternatively, however, the LED may also be an unhoused or bare LED which may fully or partially be covered with the luminescent material, such as by disposing one or more layers of the luminescent material on the LED die. The phosphor LED, generally, may form an emitter or light source by itself.

The illumination light may have a spectral range at least partially located in the near-infrared spectral range, specifically in the spectral range from 1 to 3 $\mu$m, preferably from 1.3 to 2.5 $\mu$m, more preferably from 1.5 to 2.2 $\mu$m.

The light emitting element may be configured for illuminating a defined illumination area on the sample interface. Particularly thereby, the light emitting element may define the sample interface. The optical element and/or a further optical element may be configured for directing the illumination light of the light emitting element towards the sample interface. Particularly, thereby, the optical element and/or a further optical element may define the illumination area.

The term "optical element" as used herein is a broad term and is to be given its ordinary and customary meaning to a person of ordinary skill in the art and is not to be limited to a special or customized meaning. The term specifically may refer, without limitation, to an arbitrary unit that interacts with light in a manner that it modifies the direction of propagation of at least a portion of the light and/ a light ray and/or a light beam by the optical element, such as by directing a path of the light. Alternatively or in addition, the optical element may interact with the incident light by at least one of: reflection, scatting and/or absorption, refraction (e.g., a lens), diffraction (e.g., a grating), double refraction (e.g. waveplate), dispersion (e.g. a prism). Particularly thereby, the optical element may modify at least one of: the intensity, the phase, the polarization, the direction of the light.

It should be noted that the term "further optical element" implies that the further optical element is an additional optical element. Consequently, the spectrometer device may comprise at least two optical components, particularly when the spectrometer device comprises an optical component and a further optical component. Although the definitions for the "optical element and the "further optical element" are given in the context of directing the illumination light, it should be appreciated that the definitions are further valid in various further context discussed herein. This also applies to any other definition disclosed elsewhere herein.

The optical element may be disposed in at least one of: a beam path of the illumination light; a beam path of the detection light. The optical element may be or may comprise one or more optical mirrors. The term "optical mirror" as used herein is a broad term and is to be given its ordinary and customary meaning to a person of ordinary skill in the art and is not to be limited to a special or customized meaning. The term specifically may refer, without limitation, to an optical unit having a reflective surface for reflecting at least a portion of light incident on the reflective surface. The optical mirror may reflect at least 5 % of the radiation that is incident on the optical mirror. Further typically, the optical mirror may, preferably, reflect at least 50% or, more preferably, at least 90% of the light that is incident on the optical mirror. The optical mirror may have a type selected from at least one of: a dielectric mirror, particularly a distributed Bragg mirror; or a metalized mirror, particularly metalized with gold, silver and/or aluminum. Substrates of a mirror may comprise at least one inorganic material and/or at least one organic material, particularly plastic and/or glass.

The one or more optical mirrors may be at least one of: one or more flat mirrors; one or more imaging mirrors. The term "flat mirror" as used herein is a broad term and is to be given its ordinary and customary meaning to a person of ordinary skill in the art and is not to be limited to a special or customized meaning. The term specifically may refer, without limitation, to a mirror having a planar reflecting surface. The flat mirror may have a flat reflecting surface. The flat mirror may reflect an incident light, specifically an incident light ray or light beam, in a manner that the direction of the reflected light does not depend on a position at which the light is incident on the flat mirror. A width of a beam generated by the incident radiation may remain constant when the incident radiation is reflected by the flat mirror.

The term "imaging mirror" as used herein is a broad term and is to be given its ordinary and customary meaning to a person of ordinary skill in the art and is not to be limited to a special or customized meaning. The term specifically may refer, without limitation, to a mirror having a reflecting surface that is formed in a manner that incident light, specifically an incident light ray or light beam, is focused on at least one focusing point provided by the imaging mirror. The imaging mirror may reflect the incident light in a manner that the direction of the reflected light depends on a position at which the incident light is incident on the flat mirror. The imaging mirror may be a concave and/or a convex mirror.

The one or more imaging mirror may be at least one of: one or more curved mirrors; one or more free form mirrors. The term "curved mirror" as used herein is a broad term and is to be given its ordinary and customary meaning to a person of ordinary skill in the art and is not to be limited to a special or customized meaning. The term specifically may refer, without limitation, to a mirror having a curved reflecting surface. The curved mirror may have an at least partially curved reflecting surface, specifically an at least partially concave and/or convex reflecting surface. The term "free form mirror" as used herein is a broad term and is to be given its ordinary and customary meaning to a person of ordinary skill in the art and is not to be limited to a special or customized meaning. The term specifically may refer, without limitation, to a mirror having a surface that may be described by using a polynomial function.

Alternatively or in addition, the optical element may be or may comprise one or more optical lenses; and/or one or more active optical elements, specifically one or more micro mirror arrays; and/or one or more beam splitters.

The term "optical lens" as used herein is a broad term and is to be given its ordinary and customary meaning to a person of ordinary skill in the art and is not to be limited to a special or customized meaning. The term specifically may refer, without limitation, to a transparent unit having at least one curved surface, particularly a surface curved in a spherical manner. Incident light, specifically an incident light ray or light beam, may be bend at the at least one surface of the optical lens, particularly depending on at least one of: the refractive index of the optical lens, the wavelength of the incident radiation. The incident light, such as a light ray, may be bend towards a center of a light beam comprising the light ray. Alternatively, incident light, such as a light ray, may be away from a center of a light beam comprising the light ray. An optical lens may have a convex surface for collecting and/or a concave surface for dispersing the incident light.

The term "active optical element" as used herein is a broad term and is to be given its ordinary and customary meaning to a person of ordinary skill in the art and is not to be limited to a special or customized meaning. The term specifically may refer, without limitation, to an optical element having at least two controllable optical properties. The active optical element may be configured for the two controllable optical properties being switchable, such as by using a switching unit comprised by the spectrometer device. A typical active optical element may be a micro mirror array, a liquid crystal array and/or a spatial light modulator (SLM).

The term "beam splitter" as used herein is a broad term and is to be given its ordinary and customary meaning to a person of ordinary skill in the art and is not to be limited to a special or customized meaning. The term specifically may refer, without limitation, to an optical element configured for splitting a beam of light into at least one transmitted beam and at least one reflected beam. The transmitted beam and at least one reflected beam may be directed into differing directions.

As already disclosed, the spectrometer device comprises at least one detector, wherein the detector is configured for generating at least one detector signal when receiving the detection light from the object in order to acquire the item of spectral information.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "photosensitive detector", or "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The at least one detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the at least one detector to the evaluation unit, such that the at least one detector and the evaluation unit may be directly or indirectly connected. The detector signals may be used as a "raw" detector signal and/or may be processed or preprocessed before further used, e.g. by filtering and the like. Thus, the at least one detector may comprise at least one processing device and/or at least one preprocessing device, such as at least one of an amplifier, an analogue/digital converter, an electrical filter and a Fourier transformation.

The at least one detector may be configured for detecting light propagating from the object to the spectrometer device or more specifically to the at least one detector of the spectrometer device. The at least one detector may be configured for determining at least one optical parameter, such as an intensity and/or a power of light by which at least one sensitive area of the detector is irradiated. More specifically, the at least one detector may comprise at least one photosensitive element and/or at least one optical sensor, such as at least one of a photodiode, a photocell, a photosensitive resistor, a phototransistor, a thermophile sensor, a photoacoustic sensor, a pyroelectric sensor, a photomultiplier and a bolometer. The at least one detector, thus, may be configured for generating at least one detector signal, more specifically at least one electrical detector signal, in the above-mentioned sense, providing information on at least one optical parameter, such as the power and/or intensity of light by which the detector or a sensitive area of the detector is illuminated. The at least one detector may be a Lead Sulfide (PbS) detector.

The detector may comprise a plurality of photosensitive elements, wherein each of the photosensitive elements may be configured for generating at least one detector signal for deriving the spectral information. The plurality of photosensitive elements may be arranged in an array. The term "array" as used herein is a broad term and is to be given its ordinary and customary meaning to a person of ordinary skill in the art and is not to be limited to a special or customized meaning. The term specifically may refer, without limitation, to a series of optical sensors which may, preferably, be arranged in a single line as a one-dimensional matrix along the length of the length variable filter or in more than one line, especially in two, three, or four parallel lines, in form of a two-dimensional matrix, in particular, in order to receive most of the intensity of the incident light as possible. Thus, a number N of photosensitive elements in one direction may be higher compared to a number M of photosensitive elements in a further direction such that the one-dimensional $1 \times N$ matrix or a rectangular two-dimensional M x N matrix may be obtained, wherein M < 10 and N $\geq$ 10, preferably N $\geq$ 20, more preferred N $\geq$ 50. In addition, the matrixes may also be placed in a staggered arrangement.

The plurality of photosensitive elements may be sensitive to differing, particularly not overlapping, wavelength intervals. Particularly consequently, a first photosensitive element may detect light within a first wavelength range and a second photosensitive element may detect light within a second wavelength range, wherein the first and the second wavelength range are different from each other, particularly in a manner that wavelength ranges do not overlap. There may be a third photosensitive elements having a further different, particularly not overlapping, wavelength range, and so on.

Alternatively or in addition, the plurality of photosensitive elements may each have a field of view, wherein the optical element and/or a further optical element may be configured for modifying the field of view of at least one photosensitive element in order to increase at least one overlap between at least two field of views of the plurality of photosensitive elements.

The term "field of view" as used herein is a broad term and is to be given its ordinary and customary meaning to a person of ordinary skill in the art and is not to be limited to a special or customized meaning. The term specifically may refer, without limitation, to a geometrical extent of the observable world that can be viewed by the respective sensor, such as the photosensitive element. In particular, the field of view of a photosensitive element may corresponds to a solid angle under which the respective sensor is sensitive to light, specifically detection light generated by the at least one object or a portion thereof.

The term "modifying" or any arbitrary grammatical variations thereof as used herein is a broad term and is to be given its ordinary and customary meaning to a person of ordinary skill in the art and is not to be limited to a special or customized meaning. The term specifically may refer, without limitation, to changing and/or adjusting at least one characteristic or property of something by influencing the at least one characteristic or property. The term "increasing at least one overlap between the field of views" or any arbitrary grammatical variations thereof as used herein is a broad term and is to be given its ordinary and customary meaning to a person of ordinary skill in the art and is not to be limited to a special or customized meaning. The term specifically may refer, without limitation, to enlarging an absolute amount and/or a ratio of a three-dimensional space that is simultaneously or concurrently covered by the field of views of the at least two photosensitive elements, particularly at the sample interface. The at least one optical element may be configured for modifying the field of view of each pixelated sensor of the at least two pixelated sensors for increasing the at least one overlap between the field of views, particularly in the same manner.

The photosensitive elements may each have a measurement spot on the sample interface, wherein increasing the at least one overlap between the at least two field of views of the plurality of photosensitive elements may result in an increased at least one overlap area comprising the measurement spots of the at least two field views on the sample interface. The term "measurement spot" as used herein is a broad term and is to be given its ordinary and customary meaning to a person of ordinary skill in the art and is not to be limited to a special or customized meaning. The term specifically may refer, without limitation, to a surface generated by the field of view that is located on the sample interface from which the light may be detected by the respective pixelated sensor.

A ratio between the at least one overlap area comprising the measurement spots of the at least two field of views and a combined area comprising the measurement spots of the at least two field of views on the sample interface may be at least 60 %, 70 %, 80 % or 90 %.

The measurement spot may be an imaging spot comprised by an imaging plane. Particularly consequently, the detector may be configured for having an imaging plane for receiving the detection light from the sample interface. The optical element and/or a further optical element may be configured for directing and/or focusing the imaging plane of the detector on the sample interface.

$\theta_x$ is an angle between a projection of a nominated light ray of the light described by the respective angular distribution projected in the x-z-plane and a projection of a normal on the measurement surface in the x-z-plane, wherein $\theta_y$ is an angle between a projection of a nominated light ray of the light described by the respective angular distribution projected in the y-z-plane and a projection of a normal on the measurement surface in the y-z-plane. The normal on the measurement surface may be a normal of the x-y-plane defined by the measurement surface. The normal on the measurement surface may parallel to the z-axis. Before, a respective light ray is projected into the respective plane, a vector describing the light ray may be nominated in a manner that the z- component of the vector has a length 1. The nominated light ray may be described by $\vec{a} = (a_x, a_y,$

1). Before, a respective normal on the measurement surface is projected into the respective plane, a vector describing the normal may be nominated in a manner that the z- component of the vector has a length 1. The nominated normal may be described by $\vec{n} = (0,0,1)$.

The illumination light may have an angular distribution $\Theta_I(\theta_x, \theta_y)$ on the sample interface causing an angular distribution $\Theta_I^*\left(\theta_x, \theta_y\right)$ of Specular Fresnel reflected light on the sample interface; wherein the detection light received by the detector may have an angular distribution $\Theta_C(\theta_x, \theta_y)$ on the sample interface. The spectrometer device may be configured for the angular distribution $\Theta_C(\theta_x, \theta_y)$ and the angular distribution $\Theta_I^*\left(\theta_x, \theta_y\right)$ to be at least partially separated.

$\Theta_I(\theta_x, \theta_y)$ may be a two-dimensional distribution of angles $\theta_x, \theta_y$ of illumination light on the sample interface. $\Theta_I^*\left(\theta_x, \theta_y\right)$ may be a two-dimensional distribution of angles $\theta_x, \theta_y$ of illumination light reflected due to Specular Fresnel reflections at the sample interface. $\Theta_C(\theta_x, \theta_y)$ may be a two-dimensional distribution of angles $\theta_x, \theta_y$ of detection light on the sample interface. The distributions $\Theta_I^*\left(\theta_x, \theta_y\right)$ and $\Theta_C(\theta_x, \theta_y)$ may not overlap. The sample interface may be the measurement surface.

The light that is described by the respective distribution may be

- illumination light for the angular distribution $\Theta_I(\theta_x, \theta_y)$;
- Specular Fresnel reflected light for the angular distribution $\Theta_I^*\left(\theta_x, \theta_y\right)$;
- detection light for the angular distribution $\Theta_C(\theta_x, \theta_y)$

As already discussed the x-axis and the y-axis are defined by the sample interface, specifically the x-axis and the y-axis are defined by the surface, particularly the surface being the sample interface, such as the measurement surface, at which the object is intended to interact with the spectrometer device.

The term "Specular Fresnel reflected light" or any arbitrary grammatical variations thereof as used herein is a broad term and is to be given its ordinary and customary meaning to a person of ordinary skill in the art and is not to be limited to a special or customized meaning. The term specifically may refer, without limitation, to mirror-like reflected light from a surface, particularly a surface of the object. For Specular Fresnel reflected light the angle of incidence, particularly between a normal of the surface and a light ray incident on the surface, equals the angle of reflection, particularly between a normal of the surface and a light ray reflected from the surface. Typically, the Specular Fresnel reflected light from the object do not contain spectral information on the object.

The term "detection light received by the detector" or any arbitrary grammatical variations thereof as used herein is a broad term and is to be given its ordinary and customary meaning to a person of ordinary skill in the art and is not to be limited to a special or customized meaning. The term specifically may refer, without limitation, to detection light that is incident onto the detector in a manner that it generates a detector signal from which the item of spectral information may be obtained. The detection light received by the detector may be incident on at least one photosensitive element of the detector. Particularly therefore, the detection light received by the detector may be generated within the field of view of at least one photosensitive element.

The term "overlapping" or any arbitrary grammatical variations thereof as used herein is a broad term and is to be given its ordinary and customary meaning to a person of ordinary skill in the art and is not to be limited to a special or customized meaning. The term specifically may refer, without limitation, to a state in which a plurality of structural objects and/or abstract elements share at least one common feature in such a way that the plurality of objects and/or elements are not completely separate from each other. In that sense, the term "separate" may be considered the opposite of the term "overlapping". It should be appreciated that by considering a measure for an overlap the person skilled in the art will easily derive a respective measure for a separation, and vice versa.

Particularly for the spectrometer device being configured for the angular distribution $\Theta_C(\theta_x, \theta_y)$ and the angular distribution $\Theta_I^*\left(\theta_x, \theta_y\right)$ to be at least separated, less than 50%, 40%, 30%, 20%, 10% or 0% of the angular distribution $\Theta_C(\theta_x, \theta_y)$ may overlap the angular distribution $\Theta_I^*\left(\theta_x, \theta_y\right)$. The spectrometer device may be configured for the angular distribution $\Theta_C(\theta_x, \theta_y)$ and the angular distribution $\Theta_I^*\left(\theta_x, \theta_y\right)$ to be at fully separated.

The spectrometer device may comprise at least one optical element arranged in a manner that the spectrometer device for the angular distribution $\Theta_C(\theta_x, \theta_y)$ and the angular distribution $\Theta_I^*\left(\theta_x, \theta_y\right)$ may be at least partially separated, particularly by using at least one optical element for modifying one or more of the angular distribution $\Theta_C(\theta_x, \theta_y)$ and the angular distribution $\Theta_I^*\left(\theta_x, \theta_y\right)$. The optical element, or a combination of optical elements, as further defined, may be used to modify the detection light, particularly at least a portion of a beam of the detection light, in a manner that the angular distribution $\Theta_C(\theta_x, \theta_y)$ and the angular distribution $\Theta_I^*\left(\theta_x, \theta_y\right)$ may be at least partially separated. Alternatively or in addition, the optical element, or a combination of optical elements, as further defined in the above, may be used to modify the illumination light, particularly at least a portion of a beam of the illumination light, in a manner that the angular distribution $\Theta_C(\theta_x, \theta_y)$ and the angular distribution $\Theta_I^*\left(\theta_x, \theta_y\right)$ may be at least partially separated.

When the angular distribution $\Theta_C(\theta_x, \theta_y)$ and the angular distribution $\Theta_I^*\left(\theta_x, \theta_y\right)$ may be fully separated, a minimal distance between the angular distribution $\Theta_C(\theta_x, \theta_y)$ and the angular distribution $\Theta_I^*\left(\theta_x, \theta_y\right)$ may be below 1°, 5° or 10°. The minimal distance may be measured in the $\theta_x$-$\theta_y$-plane and/or in $\theta_x$-$\theta_y$-coordinates.

The overlap $F_{C,I*}^{overlap}$ of the angular distribution $\Theta_C(\theta_x, \theta_y)$ and the angular distribution $\Theta_I^*\left(\theta_x, \theta_y\right)$ may be obtained by

$$F_{C,I*}^{overlap} = \frac{\int \Theta_C(\theta_x,\theta_y)\cdot\Theta_I^*(\theta_x,\theta_y)\,d\theta_x d\theta_y}{\int \Theta_C(\theta_x,\theta_y)d\theta_x d\theta_y\cdot\int \Theta_I^*(\theta_x,\theta_y)\,d\theta_x d\theta_y}.$$

As already disclosed, the spectrometer device comprises at least one spectrometer window, wherein the detection light and the illumination light are transmitted through the spectrometer window, wherein spectrometer window comprises an outer surface that is facing the outside of the spectrometer device; wherein the spectrometer window further comprises an inner surface that facing the inside of the spectrometer device, wherein the outer surface is opposite of the inner surface, wherein a normal of the outer surface and a normal of the inner surface are tilted, particularly to each other.

The term "spectrometer window" as used herein is a broad term and is to be given its ordinary and customary meaning to a person of ordinary skill in the art and is not to be limited to a special or customized meaning. The term specifically may refer, without limitation, to an arbitrary optically transparent window comprised by the spectrometer device. The spectrometer window may be disposed in the beam path of the illumination light and/or the detection light. Typically, the spectrometer window may have a transparency coefficient, also referred to as a transmittance coefficient, above 90%, preferably above 95%, particularly for light in a specific wavelength range. Alternatively or in addition, light outside of this specific wavelength range might be suppressed by a transmittance coefficient below 10% or below 5%. The spectrometer window may form a body, particularly an homogenous body, having a refractive index and comprising the inner surface and the outer surface.

The spectrometer window may be arranged in a housing of the spectrometer device. Alternatively or in addition, the spectrometer window may form a closure of the spectrometer device. Particularly then, the spectrometer window may comprise an outer surface that is, particularly directly, facing the outside of the spectrometer device. The outer surface of the spectrometer window may be in contact with a surrounding environment, particularly wherein the surrounding environment is not comprised and/or enclosed by the spectrometer device, such as by being enclosed by a housing of the spectrometer device. The spectrometer window may comprise an inner surface that facing the inside of the spectrometer device. The outer surface may be opposite of the inner surface. The inner surface of the spectrometer window may be in contact with an enclosed environment within the spectrometer device, particularly wherein the enclosed environment within the spectrometer device is enclosed by the housing of the spectrometer device. The enclosed environment within the spectrometer device may comprise a component of the spectrometer device and/or a gas comprised by the spectrometer device. The components may be selected from at least one of: an optical system for illumination and/or detection of light, one or more electro optical components, such as a dispersive element, a light source and/or a detector. The gas may be selected from at least one of: an ambient gas, such as an atmospheric gas. The gas may be dried, particularly by using a drying cartridge, and/or the gas may be a gel. Alternatively or in addition, the gas may not be dried. Further alternatively or in addition, a filling of the spectrometer device with nitrogen and/or one or more noble gases may be possible. The outer surface may be configured for being in contact with the object during the spectral measurement and, thereby, being used as the sample interface.

The term "tilted" as used herein is a broad term and is to be given its ordinary and customary meaning to a person of ordinary skill in the art and is not to be limited to a special or customized meaning. The term specifically may refer, without limitation, to not being aligned and/or being oriented in the same direction, such as by being parallel. Two vectors, specifically the normal of the outer surface and the normal of the inner surface, may be tilted, particularly relative to each other, when an angle, particularly larger than 0°, 0.1 °, 0.2° or 0.3°, is formed between the two vectors.

For the normal of the outer surface and the normal of the inner surface being tilted, an angle between the normal of the outer surface and the normal of the inner surface may be between 0.5° and 10°, more specifically 0.5° and 5°.

Particularly due to the normal of the outer surface and the normal of the inner surface being tilted, the spectrometer window may have a wedge shaped cross-section, wherein the outer surface and the inner surface may be the convergent surfaces of the wedge.

The term "wedge shaped" as used herein is a broad term and is to be given its ordinary and customary meaning to a person of ordinary skill in the art and is not to be limited to a special or customized meaning. The term specifically may refer, without limitation, to a form of an element that is narrow at an end of the element and wider at a further end of the element. Typically, the element may become gradually narrower as is extends in a specific direction. An wedge shaped element may comprise two converging sides. The converging sides may meet at the narrow end of the element. Alternatively, the converging sides may remain distance from each other at the narrow end of the element. A normal of the cross section may be orthogonal to the normal of the outer surface and/or the inner surface.

The refractive index of the spectrometer window may be above 1, specifically above 1.2, more specifically above 1.4. The refractive index of the spectrometer window may be below 6, specifically below 5, more specifically below 4. The spectrometer window may be or may comprise at least one of: silicon; fused silica, specifically quartz; an optical glass, such as fused silica and/or quartz; a synthetic material and/or plastic material.

The outer surface may have a saw tooth shaped cross section, particularly in a manner that the outer surface acts as a Fresnel lens, particularly for decreasing the thickness of the spectrometer window.

The term "saw tooth shaped" as used herein is a broad term and is to be given its ordinary and customary meaning to a person of ordinary skill in the art and is not to be limited to a special or customized meaning. The term specifically may refer, without limitation, to a form of an element that is a pattern comprising a plurality of peaks and valleys. The pattern may comprise a plurality of triangular shapes. A normal of the cross section may be orthogonal to the normal of the outer surface and/or the inner surface.

The term "Fresnel lens" as used herein is a broad term and is to be given its ordinary and customary meaning to a person of ordinary skill in the art and is not to be limited to a special or customized meaning. The term specifically may refer, without limitation, to a specific optical lens developed by A. J. Fresnel. The refractive surface of a Fresnel lens may comprise steps, such as saw teeth, particularly in order to reduce the thickness of the Fresnel lens, particularly when compared to a thickness of an optical lens not being a Fresnel lens. Such a step lens is composed of prismatic sections consisting of parallel strips or concentric circular rings.

The spectrometer window may comprise a meta lens, particularly for decreasing the thickness of the spectrometer window. The term "meta lens" as used herein is a broad term and is to be given its ordinary and customary meaning to a person of ordinary skill in the art and is not to be limited to a special or customized meaning. The term specifically may refer, without limitation, to a specific optical lens comprising at least one metamaterial. The metamaterial may be selected from at least one of a silicon-based meta material; a glass; a synthetic material-based meta material.

The spectrometer window may comprises an optical system that is used as a Fresnel lens, particularly for decreasing the height of the module. The optical system that is used as a Fresnel lens may be comprise at least one of an optical glass, a synthetic material, silicon.

The spectrometer device may be further comprising at least one evaluation unit, wherein the evaluation unit is configured for evaluating the detector signal for obtaining the item of spectral information on the object.

The term "to evaluate", as used herein, is a broad term and is to be given its ordinary and customary meaning to a person of ordinary skill in the art and is not to be limited to a special or customized meaning. The term specifically may refer, without limitation, to the process of processing at least one first item of information in order to generate at least one second item of information thereby. Consequently, the term "evaluation unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured to evaluate or process at least one first item of information, in order to generate at least one second item of information thereof. Thus, specifically, the evaluation unit may be configured for processing at least one input signal and to generate at least one output signal thereof. The at least one input signal, as an example, may comprise at least one detector signal provided directly or indirectly by the at least one photosensitive detector.

As an example, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. Further, the evaluation unit may comprise one or more data storage devices. Further, the evaluation unit may comprise one or more interfaces, such as one or more wireless interfaces and/or one or more wire-bound interfaces.

The spectrometer device further may comprise at least one wavelength-selective element. The wavelength-selective element may be disposed in at least one of:

- a beam path of the illumination light; and
- a beam path of the detection light.

The wavelength-selective element may be configured and/or arranged in a manner that at least two photosensitive elements of the plurality of photosensitive elements may be exposed to an individual, specifically differing, spectral range of detection light from the object.

As used herein, the term "wavelength-selective element" is a broad term and is to be given its ordinary and customary meaning to a person of ordinary skill in the art and is not to be limited to a special or customized meaning. The term specifically may refer, without limitation, to an arbitrary optical element which interacts with differing spectral portions of incident light in a different manner, e.g. by having at least one wavelength-dependent optical property, such as at least one wavelength-dependent optical property selected from the list consisting of a degree of reflection, a direction of reflection, a degree of refraction, a direction of refraction, an absorption, a transmission, an index of refraction.

The wavelength-selective element may be configured such that each of the photosensitive detectors may be exposed to the same spectral range of the detection light. The wavelength-selective element may be selected from the group of a tunable wavelength-selective element and a wavelength-selective element having a fixed transmission spectrum. By using a tunable wavelength selective element, as an example, differing wavelength ranges may be selected sequentially, whereas, by using a wavelength-selective element having a fixed transmission spectrum, the selection of the wavelength ranges may be fixed and may, however, be dependent e.g. on a detection position, thereby allowing, as an example, in the detection light beam path, for simultaneously exposing different detectors and/or different photosensitive detectors of the detector to differing spectral ranges of light.

Thus the at least one wavelength-selective element may comprise at least one of a filter, a grating, a prism, a plasmonic filter, a diffractive optical element and a metamaterial. More specifically, the spectrometer device may comprise at least one wavelength-selective element disposed in a beam path of the light from the object, i.e. in the beam path of the detection light, wherein the wavelength-selective element, specifically may be configured such that each of the photosensitive detectors is exposed to an individual spectral range of the light from the object. As an example, a variable wavelength-selective element may be used, the transmission of which depends on a position on the wavelength-selective element, such that, when the variable wavelength-selective element is placed on top of the array of photosensitive detectors, the individual photosensitive detectors are exposed to differing spectral ranges of the incident light, specifically the detection light from the object.

The wavelength-selective element may be selected from the group of a tunable wavelength-selective element and a wavelength-selective element having a fixed transmission spectrum. The wavelength-selective element may be or may comprise at least one of: a length variable filter; a static filter; a tunable filter, particularly a MEMS Fabry-Perot cavity; an optical lens; a diffractive element.

The term "length variable filter" as used herein is a broad term and is to be given its ordinary and customary meaning to a person of ordinary skill in the art and is not to be limited to a special or customized meaning. The term specifically may refer, without limitation, to an optical filter which comprises a plurality of individual filter elements, preferably a plurality of interference filter elements, which may, in particular, be provided in a continuous arrangement of the individual filter elements. Herein, each of the filter elements may form a bandpass with a variable center wavelength for each spatial position on the filter, preferably continuously, along a single dimension, which is, usually, denoted by the term "length", on a receiving surface of the length variable filter. The variable center wavelength may be a linear function of the spatial position of each filter element, in which case the length variable filter is usually referred to as a "linearly variable filter" or by its abbreviation "LVF". However, other kinds of functions may be applicable to the relationship between the variable center wavelength and the spatial position on the individual filter elements. Herein, the individual filter elements may be located on a transparent substrate which may, in particular, comprise at least one material that may show a high degree of optical transparency within in the infrared (IR) spectral range, especially, within the near-infrared (NIR) spectral range as described below in more detail, whereby varying spectral properties, especially continuously varying spectral properties, of the filter along length of the filter may be achieved. In particular, the length variable filter may be a wedge filter that may be adapted to carry at least one response coating on a transparent substrate, wherein the response coating may exhibit a spatially variable property, in particular, a spatially variable thickness. However, other kinds of length variable filters which may comprise other materials or which may exhibit a further spatially variable property may also be feasible. At a normal angle of incidence of an incident light ray or light beam, each of the filter elements as comprised by the length variable filter may have a bandpass width that may amount to a fraction of the center wavelength, typically to a few percent, of the particular filter.

The term "static filter" as used herein is a broad term and is to be given its ordinary and customary meaning to a person of ordinary skill in the art and is not to be limited to a special or customized meaning. The term specifically may refer, without limitation, to an optical filter, particularly a bandpass filter, which blocks and/or selects light of a predetermined wavelength range, specifically by reflecting and/or absorbing. The wavelength range may be fixed. A fixed wavelength length may be unchangeable and/or static. The optical properties of the static filter may not be time-varying.

The term "tunable filter" as used herein is a broad term and is to be given its ordinary and customary meaning to a person of ordinary skill in the art and is not to be limited to a special or customized meaning. The term specifically may refer, without limitation, to an optical filter which blocks and/or selects light of an adjustable wavelength range. The optical properties of the tunable filter may be time-varying. An interferometer may be used as a tunable filter, specifically a Fabry-Perot interferometer, Mach-Zehnder interferometer and/or a Michelson interferometer. Alternatively, angle-dependent wavelength shifts of a static filter may be utilized. This may be realized by using at least one micro electro mechanical system, MEMS, where moving parts of the interferometer are realized be using micro actuators.

The term "diffractive element" as used herein is a broad term and is to be given its ordinary and customary meaning to a person of ordinary skill in the art and is not to be limited to a special or customized meaning. The term specifically may refer, without limitation, to an item for shaping the incident radiation by diffraction of the incident radiation at an optical grating.

The length variable filter may comprise at least two bandpass filters, wherein each bandpass filter may be assigned to a respective pixelated sensor by being arranged within the field of view of the respective pixelated sensor, wherein each bandpass filter may be configured for selecting at least one wavelength of the accepted incident radiation. The term "bandpass filter" as used herein is a broad term and is to be given its ordinary and customary meaning to a person of ordinary skill in the art and is not to be limited to a special or customized meaning. The term specifically may refer, without limitation, to an optical filter that allows only incident radiation having a wavelength that is within a predefined range to pass. Incident radiation having a wavelength below and/or above the predefined range may be blocked or may be significantly attenuated. The selected at least one wavelength may be within the predefined range. The selected at least one wavelength may be transferred onto the respective pixelated sensor. The term "assigned to a respective pixelated sensor" as used herein is a broad term and is to be given its ordinary and customary meaning to a person of ordinary skill in the art and is not to be limited to a special or customized meaning. The term specifically may refer, without limitation, to transmitting the accepted incident radiation onto the respective pixelated sensor. Thereby, the at least two bandpass filters may be arranged in a manner that each bandpass filter of the at least two bandpass filters is placed within a field of view of a different pixelated sensor.

The length variable filter may comprise at least two bandpass filters, wherein each bandpass filter may be arranged in the field of view of a specific photosensitive element, wherein each bandpass filter may be configured for selecting at least one wavelength range of the detection light.

In a further aspect, a mobile device, wherein the mobile device comprises a spectrometer device as disclosed elsewhere herein. For this aspect, reference may be made to any definition, Embodiment, claim and/or aspect as disclosed herein.

The term "mobile device" as used herein is a broad term and is to be given its ordinary and customary meaning to a person of ordinary skill in the art and is not to be limited to a special or customized meaning. The term specifically may refer, without limitation, to a mobile electronics device more specifically to a mobile communication device, configured for providing access to at least one telecommunication network, such as a cell phone, smart phone or a wearable. The mobile device may be a portable device.

The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 $m^3$, specifically of no more than 0.01 $m^3$, more specifically no more than 0.001 $m^3$ or even no more than 500 mm3. In particular, as an example, the portable spectrometer device may have dimensions of e.g. 10 mm by 10 mm by 5 mm. Specifically, the portable spectrometer device may be part of a mobile device or may be attachable to a mobile device, such as a notebook computer, a tablet, a cell phone, such as a smart phone, a smartwatch and/or a wearable computer, also referred to as "wearable", e.g. a body borne computer such as a wrist band or a watch. In particular, the a weight of the spectrometer device, specifically the portable spectrometer device, may be in the range from 1 g to 100 g, more specifically in the range from 1 g to 10 g.

In a further aspect, a method for operating a spectrometer device for obtaining spectral information on at least one object is disclosed, wherein the method comprises using a spectrometer device for obtaining the spectral information as disclosed elsewhere herein. For this aspect, reference may be made to any definition, Embodiment, claim and/or aspect as disclosed herein.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, notwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The spectrometer device for obtaining at least one item of spectral information, the mobile device and the method for operating a spectrometer device for obtaining spectral information according to the present invention, in one or more of the above-mentioned embodiments and/or in one or more of the embodiments described in further detail below, provide a large number of advantages over known devices and methods of similar kind.

Particularly the present invention improves the detection efficiency of the spectrometer device. The present invention further improves the signal-to-noise ratio of the spectrometer device. The present invention further decreases, advantageously, the amount of light collection of large angles between the illumination light and reflected detection light. The present invention further increases the dynamic range of the spectrometer device. The present invention further improves the spectral contrast and/or reduces the stray light. The present invention further improves the tolerance of the device to the position of the sample.

The spectrometer device may comprise a silicon measurement window in order to block shorter wavelengths of light. Due to the high refractive index, the silicon window may have a strong influence on the optical path. The measurement window may be used as optical element in the design to improve the performance of the optical system.

The measurement window may be a wedged shaped measurement window, particularly in order to solve at least one, specifically bot, the previously highlighted problems. As a first effect, the sample may be viewed under a smaller angle. As a second effect, the illumination light may be shifted in the same direction. The second effect may be less pronounced compared to the first effect. However, both effects are of benefit to the spectrometer device. Additionally, the shape and/or surface of the measurement window may be shaped like a sawtooth. The measurement window may be and/or may comprise a metalens.

Summarizing and without excluding further possible embodiments, the following embodiments may be envisaged:

Embodiment 1: A spectrometer device for obtaining at least one item of spectral information on at least one object by spectral measurement, wherein the spectrometer device comprises:

(1) at least one sample interface, wherein the sample interface defines a measurement surface, wherein the measurement surface is configured for defining a measurement pose of the object, particularly during the spectral measurement, particularly wherein the measurement surface further defines an x-y- plane and, thereby, defines an x-axis and a y-axis;

(2) at least one light emitting element, wherein the light emitting element is configured for emitting illumination light for illuminating the at least one object in order to generate detection light from the at least one object;

(3) at least one detector, wherein the detector is configured for generating at least one detector signal when receiving the detection light from the object in order to acquire the item of spectral information;

(4) at least one spectrometer window, wherein the detection light and the illumination light are transmitted through the spectrometer window, wherein spectrometer window comprises an outer surface that is facing the outside of the spectrometer device; wherein the spectrometer window further comprises an inner surface that facing the inside of the spectrometer device, wherein the outer surface is opposite of the inner surface, wherein a normal of the outer surface and a normal of the inner surface are tilted, particularly to each other.

Embodiment 2: The spectrometer device according to the preceding Embodiment, wherein the outer surface is configured for being in contact with the object during the spectral measurement and, thereby, being used as the sample interface.

Embodiment 3: The spectrometer device according to any one of the preceding Embodiments, wherein, for the normal of the outer surface and the normal of the inner surface being tilted, an angle between the normal of the outer surface and the normal of the inner surface is between 0.5° and 10°, more specifically 0.5° and 5°.

Embodiment 4: The spectrometer device according to any one of the preceding Embodiments, wherein the refractive index of the spectrometer window is above 1, specifically above 1.2, more specifically above 1.4.

Embodiment 5: The spectrometer device according to any one of the preceding Embodiments, wherein the refractive index of the spectrometer window is below 6, specifically below 5, more specifically below 4.

Embodiment 6: The spectrometer device according to any one of the preceding Embodiments, wherein the of the spectrometer window is or comprises at least one of:

- silicon;
- fused silica, specifically quartz;
- an optical glass, such as fused silica and/or quartz;
- a synthetic material and/or plastic material.

Embodiment 7: The spectrometer device according to any one of the preceding Embodiments, wherein the spectrometer window has a wedge shaped cross-section, wherein the outer surface and the inner surface are the convergent surfaces of the wedge.

Embodiment 8: The spectrometer device according to any one of the preceding Embodiments, wherein the outer surface has a saw tooth shaped cross section, particularly in a manner that the outer surface acts as a Fresnel lens, particularly for decreasing the thickness of the spectrometer window.

Embodiment 9: The spectrometer device according to any one of the preceding Embodiments, wherein the spectrometer window comprises a meta lens, particularly for decreasing the thickness of the spectrometer window.

Embodiment 10: The spectrometer device according to any one of the preceding Embodiments, wherein the spectrometer window comprises an optical system that is used as a Fresnel lens, particularly for decreasing the thickness of the spectrometer window.

Embodiment 11: The spectrometer device according to any one of the preceding Embodiments, wherein the incident illumination light shows an angular distribution $\Theta_I(\theta_x, \theta_y)$ on the sample interface causing an angular distribution $\Theta_I^*(\theta_x, \theta_y)$ of Specular Fresnel reflected light on the sample interface, wherein the detection light received by the detector shows an angular distribution $\Theta_C(\theta_x, \theta_y)$ on the sample interface, wherein the spectrometer device is configured for the angular distribution $\Theta_C(\theta_x, \theta_y)$ and the angular distribution $\Theta_I^*(\theta_x, \theta_y)$ to be at least partially separated, particularly by using at least one optical element for modifying one or more of the angular distribution $\Theta_C(\theta_x, \theta_y)$ and the angular distribution $\Theta_I^*(\theta_x, \theta_y)$, wherein $\theta_x$ is an angle between a projection of a nominated light ray of the light described by the respective angular distribution projected in the x-z-plane and a projection of a normal on the measurement surface in the x-z-plane, wherein $\theta_y$ is an angle between a projection of a nominated light ray of the light described by the respective angular distribution projected in the y-z-plane and the projection of a normal on the measurement surface in the y-z-plane.

Embodiment 12: The spectrometer device according to the preceding Embodiment, wherein, for the spectrometer device being configured for the angular distribution $\Theta_C(\theta_x, \theta_y)$ and the angular distribution $\Theta_I^*(\theta_x, \theta_y)$ to be at least separated, less than 50%, 40%, 30%, 20%, 10% or 0% of the angular distribution $\Theta_C\theta_x, \theta_y$ overlaps the angular distribution $\Theta_I^*(\theta_x, \theta_y)$.

Embodiment 13: The spectrometer device according to any one of the two preceding Embodiments, wherein the spectrometer device is configured for the angular distribution $\Theta_C(\theta_x, \theta_y)$ and the angular distribution $\Theta_I^*(\theta_x, \theta_y)$ to be fully separated.

Embodiment 14: The spectrometer device according to any one of the three preceding Embodiments, wherein the spectrometer device comprises at least one optical element arranged in a manner that the spectrometer device for the angular distribution $\Theta_C(\theta_x, \theta_y)$ and the angular distribution $\Theta_I^*(\theta_x, \theta_y)$ are at least partially separated, particularly by using at least one optical element for modifying one or more of the angular distribution $\Theta_C(\theta_x, \theta_y)$ and the angular distribution $\Theta_I^*(\theta_x, \theta_y)$.

Embodiment 15: The spectrometer device according to the preceding Embodiment, wherein the optical element is disposed in at least one of:

- a beam path of the illumination light;
- a beam path of the detection light.

Embodiment 16: The spectrometer device according to any one of the two preceding Embodiments, wherein the optical element is or comprises

- one or more optical mirrors;
- one or more optical lenses;
- one or more active optical elements, specifically one or more micro mirror arrays;
- one or more beam splitters.

Embodiment 17: The spectrometer device according to any one of the three preceding Embodiments, wherein the one or more optical mirrors are at least one of:

- one or more flat mirrors;
- one or more imaging mirrors.

Embodiment 18: The spectrometer device according to the preceding Embodiment, wherein the one or more imaging mirror are at least one of:

- one or more curved mirrors;
- one or more free form mirrors.

Embodiment 19: The spectrometer device according to any one of the six preceding Embodiments, wherein, when the angular distribution $\Theta_C(\theta_x, \theta_y)$ and the angular distribution $\Theta_I^*(\theta_x, \theta_y)$ are fully separated, a minimal distance between the angular distribution $\Theta_C(\theta_x, \theta_y)$ and the angular distribution $\Theta_I^*(\theta_x, \theta_y)$ is above 1°, 2° or 3°.

Embodiment 20: The spectrometer device according to any one of the preceding Embodiments, wherein the overlap $F_{C,I*}^{overlap}$ of the angular distribution $\Theta_C(\theta_x, \theta_y)$ and the angular distribution $\Theta_I^*(\theta_x, \theta_y)$ is obtained by

$$F_{C,I*}^{overlap} = \frac{\int \Theta_C(\theta_x,\theta_y)\cdot\Theta_I^*(\theta_x,\theta_y)\, d\theta_x d\theta_y}{\int \Theta_C(\theta_x,\theta_y) d\theta_x d\theta_y \cdot \int \Theta_I^*(\theta_x,\theta_y)\, d\theta_x d\theta_y}.$$

Embodiment 21: The spectrometer device according to any one of the preceding Embodiments, wherein the light emitting element is configured for illuminating a defined illumination area on the outer surface.

Embodiment 22: The spectrometer device according to the preceding Embodiment, wherein the optical element and/or a further optical element configured for directing the illumination light of the light emitting element towards the outer surface and, thereby, defining the illumination area.

Embodiment 23: The spectrometer device according to any one of the preceding Embodiments, wherein the light emitting element is at least one of:

- a thermal radiator;
- a microelectromechanical system (MEMS)-based emitter;
- a laser, specifically a vertical cavity surface emitting laser (VCSEL), particularly emitting at least one wavelength in the infrared region;
- a light-emitting diode (LED), particularly

    ○ a LED emitting light that is at least partially located in the infrared spectral range and/or
    ○ a LED illuminating a phosphor for light-conversion of light generated by the LED, wherein the luminescent material generates converted light that is at least partly located in the near-infrared spectral range.

Embodiment 24: The spectrometer device according to any one of the preceding Embodiments, wherein the illumination light has a spectral range at least partially located in the near-infrared spectral range, specifically in the spectral range from 1 to 3 μm, preferably from 1.3 to 2.5 μm, more preferably from 1.5 to 2.2 μm.

Embodiment 25: The spectrometer device according to any one of the preceding Embodiments, wherein the detector is configured for having an imaging plane for receiving the detection light from the outer surface.

Embodiment 26: The spectrometer device according to the preceding Embodiment, wherein the optical element and/or a further optical element is configured for directing and/or focusing the imaging plane of the detector on the sample interface.

Embodiment 27: The spectrometer device according to any one of the preceding Embodiments, wherein the detector comprises a plurality of photosensitive elements, wherein each of the photosensitive elements is configured for generating at least one detector signal for deriving the spectroscopic information.

Embodiment 28: The spectrometer device according to the preceding Embodiment, wherein the plurality of photosensitive elements are arranged in an array.

Embodiment 29: The spectrometer device according to any one of the two preceding Embodiments, wherein the plurality of photosensitive elements are sensitive to differing wavelength intervals.

Embodiment 30: The spectrometer device according to any one of the three preceding Embodiments, wherein the plurality of photosensitive elements each have a field of view, wherein the optical element and/or a further optical element is configured for modifying the field of view of at least one photosensitive element in order to increase at least one overlap between at least two field of views of the plurality of photosensitive elements.

Embodiment 31: The spectrometer device according to the preceding Embodiment, wherein the photosensitive elements each have a measurement spot on the sample interface, wherein increasing the at least one overlap between the at least two field of views of the plurality of photosensitive elements results in an increased at least one overlap area comprising the measurement spots of the at least two field views on the sample interface.

Embodiment 32: The spectrometer device according to the preceding Embodiment, wherein a ratio between the at least one overlap area comprising the measurement spots of the at least two field of views and a combined area comprising the measurement spots of the at least two field of views on the sample interface is at least 60 %, 70 %, 80 % or 90 %.

Embodiment 33: The spectrometer device according to any one of the preceding Embodiments, wherein the spectrometer device is further comprising at least one evaluation unit, wherein the evaluation unit is configured for evaluating the detector signal for obtaining the item of spectral information on the object.

Embodiment 34: The spectrometer device according to any one of the preceding Embodiments, wherein the spectrometer device further comprises at least one wavelength-selective element, wherein the wavelength-selective element is disposed in at least one of:

- a beam path of the illumination light; and
- a beam path of the detection light.

Embodiment 35: The spectrometer device according to the preceding Embodiment, wherein the wavelength-selective element is configured and/or arranged in a manner that at least two photosensitive elements of the plurality of photosensitive elements are exposed to an individual, specifically differing, spectral range of detection light from the object.

Embodiment 36: The spectrometer device according to the two preceding Embodiments, wherein the wavelength-selective element is selected from the group of a tunable wavelength-selective element and a wavelength-selective element having a fixed transmission spectrum.

Embodiment 37: The spectrometer device according to any one of the three preceding Embodiments, wherein the wavelength-selective element is or comprises at least one of:

- a length variable filter;
- a static filter;
- a tunable filter, particularly a MEMS Fabry-Perot cavity;
- an optical lens;
- a diffractive element.

Embodiment 38: The spectrometer device according to the preceding Embodiment, wherein the length variable filter comprises at least two bandpass filters, wherein each bandpass filter is arranged in the field of view of a specific photosensitive element, wherein each bandpass filter is configured for selecting at least one wavelength range of the incident radiation.

Embodiment 39: A mobile device, wherein the mobile communication device comprises a spectrometer device according to any one of the preceding Embodiments.

Embodiment 40: A method for operating a spectrometer device for obtaining spectroscopic information on at least one object, wherein the method comprises using a spectrometer device according to any one the preceding Embodiments.

Brief description of the figures

Further optional details and features of the invention are evident from the description of preferred exemplary embodiments which follows in conjunction with the dependent claims. In this context, the particular features may be implemented in an isolated fashion or in combination with other features. The invention is not restricted to the exemplary embodiments. The exemplary embodiments are shown schematically in the figures. Identical reference numerals in the individual figures refer to identical elements or elements with identical function, or elements which correspond to one another with regard to their functions.

In the Figures:

| | |
|---|---|
| Figure 1 | shows contributions to reflected light from an object; |
| Figure 2 | shows a dependency of an exemplary attenuation coefficient k of |

water on the wavelength;

Figure 3    shows a dependency of an exemplary recorded reflection spectrum on the angle at which detection light is received from the object;

Figure 4    shows an exemplary spectrometer device for obtaining at least one item of spectral information;

Figure 5    shows an exemplary further exemplary spectrometer device;

Figure 6    shows an exemplary several angular distributions on the sample interface;

Figure 7    shows an exemplary further exemplary spectrometer device;

Figure 8    shows an exemplary further exemplary spectrometer device;

Figure 9    shows the definition of the angles $\theta_x$, $\theta_y$ and $\theta_C$;

Figure 10   shows a dependency of the radiant intensity on the scattering angle.

Figure 11   shows a dependency of the angular distributions on the angle between the normal of the outer surface and the normal of the inner surface;

Figure 12   shows a dependency of a viewing angle on the angle between the normal of the normal of the outer surface and the normal of the inner surface; and

Figures 13a-13c   shows several angular distribution on the sample interface are illustrated depending on the angle between the normal of the outer surface and the normal of the inner surface.

Detailed description of the embodiments

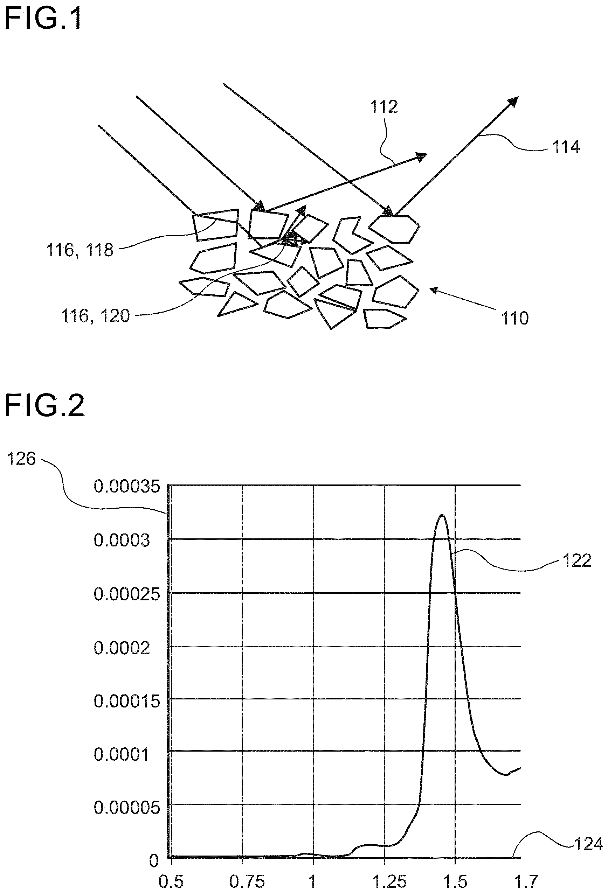

Figure 1 shows exemplarily three contributions to the light that is reflected from an object 110, particularly for an object being and/or comprising a biological tissue. Typically, the reflected light may comprise Diffuse Fresnel reflected light (indicated by a light ray denote by reference number 112). Diffusive Fresnel reflected light is generated in a scattering process on a surface of the object, particularly on a rough surface of the object. Additionally, the reflected light may comprise Specular Fresnel reflected light (indicated by a light ray denote by reference number 114). Specular Fresnel reflected light results from a mirror like behavior of the surface of the object. It does not contain absorption information on the object. Furthermore, the reflected light may comprise Volume reflected light (indicated by light rays denote by reference number 116). Volume reflected light may be Kubelka-Munk reflected light, also referred to as sub-surface reflected light. Volume reflected light may combine refractive (indicated by reference number 118) and diffractive effects (indicated by reference number 120). Volume reflected light may be influenced by at least one of: a particle size; a structure; a shape; an extinction coefficient of object 110. Typically, the ratio between Specular Fresnel reflected light and diffusive Fresnel reflected light may be given by a surface roughness of the object relative to a wavelength of the reflected light.

Typically light propagation in a medium may be described by a complex refractive index $\hat{n} = \eta + ik$, wherein $n$ is a refractive index of the object 110 and $k$ is an extinction coefficient, also referred to as an attenuation coefficient, of the object 110. Particularly in absorption spectroscopy, the goal may be, typically, to determine and/or to distinguish at least one component of the object, such as a material of the object, via light absorption. Light absorption may be determined by the extinction coefficient k.

Fresnel reflection may occur at interfaces between two media 1, 2 each having a different complex refractive index $\hat{n}_i$. For normal incidence angles perpendicular to a surface, Fresnel reflection may be determined by using the following equation

$$R_{Fresnel} = \left| \frac{\hat{n}_1 - \hat{n}_2}{\hat{n}_1 + \hat{n}_2} \right|^2.$$

The refractive index $n$ and attenuation coefficient $k$ may be coupled via the so called Kramers-Kronig relations. Typically, in the near-infrared region, the refractive index $n$ may be much larger than the attenuation coefficient k. This may be derived from Figure 2, which shows an attenuation coefficient k (denoted by reference number 122) of water. On the horizontal axis 124, the wavelength in $\mu$m is depicted. On the vertical axis 126, the attenuation coefficient $k$ is depicted. The attenuation coefficient $k$ is around 0.0003 at a wavelength of 1450 nm. For comparison, the refraction index $n$ of water is around 1.37 at a wavelength of 1450 nm. Consequently, Fresnel reflection may not be influenced by the extinction coefficient k and Fresnel reflections may not carry information about light absorption by the medium in the near-infrared. In contrast, in the mid-infrared region, extinction coefficients $k$ are on the order of the refractive index $n$. Thus, Fresnel reflection is strongly influenced by the extinction coefficient. This effect is used in Attenuated total reflection spectroscopy in the mid infrared.

The reflectance of light propagating through the object 110, such as it is the case for Volume reflected light 116, may be derived by considering

-    the absorption via the extinction coefficient k, which may be described by the Lambert-Beer law and/or
-    the scattering of light on optical interfaces within the object, also known as Kubelka-Munk reflection or sub-surface reflection, which combines refractive and diffractive effects at the optical interfaces between components having different optical properties, e.g. the surface of pores, cells and/or blood vessels of a biological tissue.

The absorption and the scattering may determine the amount of reflected light generated by the sample. As absorption imprints spectral information into the reflected light, such as exemplarily described by the Lambert-Beer law, a reflection spectrum comprising Volume reflected light carries information on the composition of the object, such as the concentration of biomarkers in tissue.

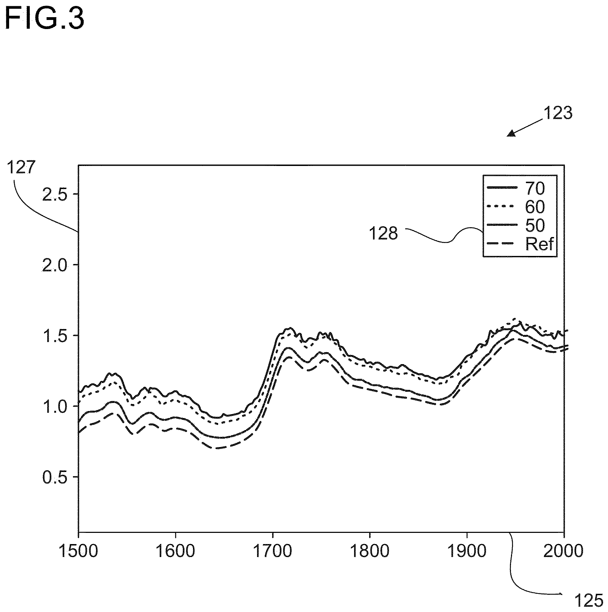

As may further be derived from Figure 3, due to the interplay of Volume reflection, Specular Fresnel reflection and Diffusive Fresnel reflection, a recorded reflection spectrum (denoted by reference number 123) shows a dependence on an angle at which detection light 142 is received from the object. Alternatively or in addition, a recorded reflection spectrum may show a dependency on an angle at which illumination light impinges on the object (not depicted in Figure 3). On the horizontal axis 125 of Figure 3, the wavelength is depicted in nm. On the vertical axis 126, the absorbance is depicted. The recorded reflection spectrum (denoted by reference number 123) is free of contributions of Specular Fresnel reflected light.

The exemplary recorded reflection spectrum depicted in Figure 3 is Polycaprolactam. The numbers in the legend 128 of Figure 3 refer to an angle at which detection light 142 is received from the object 110 in respect to a surface normal of the object 110. The term "Ref" denoted in the legend 128 indicates a measurement recorded by using an integration sphere.

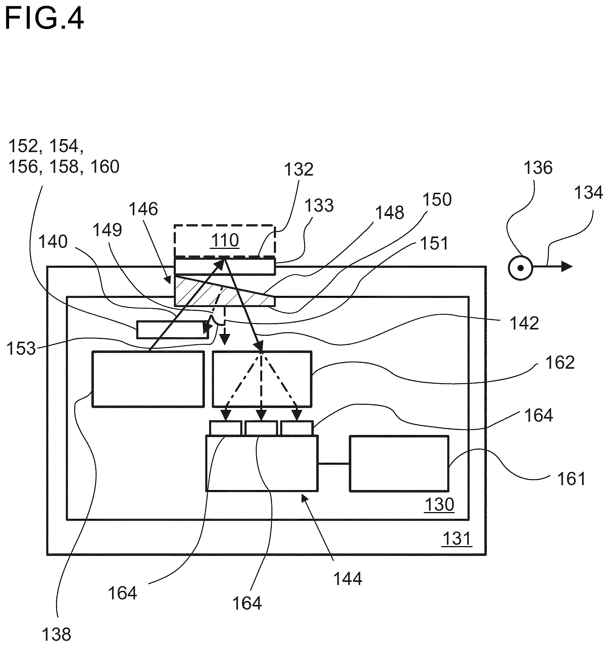

Figure 4 shows an exemplary spectrometer device 130 for obtaining at least one item of spectral information on at least one object 110 by spectral measurement. An exemplary mobile communication device 131 comprises the exemplary spectrometer device 130.

The mobile communication device 131 comprises a device window 133 that may be used as the sample interface 132. The exemplary spectrometer device 130 comprises:

(1) at least one sample interface 132, wherein the sample interface 132 defines a measurement surface, wherein the measurement surface is configured for defining a measurement pose of the object 110, particularly during the spectral measurement, particularly wherein the measurement surface further defines an x-y- plane and, thereby, defines an x-axis 134 and a y-axis 136;
(2) at least one light emitting element 138, wherein the light emitting element 138 is configured for emitting illumination light 140 for illuminating the at least one object 110 in order to generate detection light 142 from the at least one object 110;
(3) at least one detector 144, wherein the detector is configured for generating at least one detector signal when receiving the detection light 142 from the object 110 in order to acquire the item of spectral information;
(4) at least one spectrometer window 146, wherein the detection light 142 and the illumination light 140 are is transmitted through the spectrometer window 146, wherein spectrometer window comprises an outer surface 148 that is facing the outside of the spectrometer device 130 ; wherein the spectrometer window 146 further comprises an inner surface 150 that facing the inside of the spectrometer device 130, wherein the outer surface 148 is opposite of the inner surface 150, wherein a normal 149 of the outer surface 148 and a normal 151 of the inner surface 150 are tilted, particularly to each other.

The outer surface 148 may be configured for being in contact with the object 110 during the spectral measurement and, thereby, being used as the sample interface 132.

For the normal 151 of the outer surface 148 and the normal 149 of the inner surface 150 being tilted, an angle (denoted by reference number 153) the normal 151 of the outer surface 148 and the normal 149 of the inner surface 150 may be between 0.5° and 10°, more specifically 0.5° and 5°. The outer surface 148 may be tilted in respect to the device window 133. The inner surface 150 may be parallel to the device window 133.

The refractive index of the spectrometer window 146 may be above 1, specifically above 1.2, more specifically above 1.4. The refractive index of the spectrometer window 146 may be below 6, specifically below 5, more specifically below 4.

The spectrometer window may be or may comprises a least one of: silicon; fused silica, specifically quartz; an optical glass; a synthetic material and/or plastic material such as fused silica and/or quartz.

The spectrometer window 146 may have a wedge shaped cross-section, wherein the outer surface 148 and the inner surface 150 are the convergent surfaces of the wedge. Alternatively or in addition, the outer surface 148 may have a saw tooth shaped cross section, particularly in a manner that the outer surface 148 acts as a Fresnel lens, particularly for decreasing the thickness of the spectrometer window 146. The spectrometer window 146 may comprise a meta lens, particularly for decreasing the thickness of the spectrometer window 146. The spectrometer window 146 may comprise an optical system that is used as a Fresnel lens, particularly for decreasing the thickness of the spectrometer window 146.

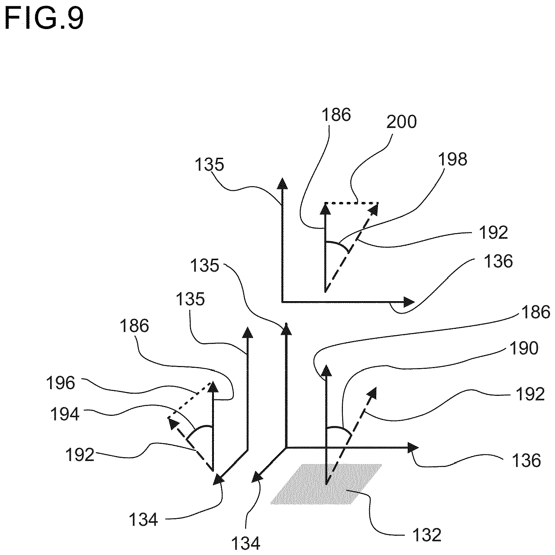

The incident illumination light 140 may have an angular distribution $\Theta_I(\theta_x, \theta_y)$ on the sample interface 132 causing an angular distribution $\Theta_I^*(\theta_x, \theta_y)$ of Specular Fresnel reflected light on the sample interface 132; wherein $\theta_x$ is an angle between a projection of a nominated light ray of the light described by the respective angular distribution projected in the x-z-plane and a projection of a normal on the measurement surface in the x-z-plane, wherein $\theta_y$ is an angle between a projection of a nominated light ray of the light described by the respective angular distribution projected in the y-z-plane and a projection of a normal on the measurement surface in the y-z-plane (the angles $\theta_x$, $\theta_y$ and an angle $\theta_C$ are depicted in Figure 9). The detection light 142 received by the detector 144 may have an angular distribution $\Theta_C(\theta_x, \theta_y)$ on the sample interface 132; wherein the spectrometer device 130 is configured for the angular distribution $\Theta_C(\theta_x, \theta_y)$ and the angular distribution $\Theta_I^*(\theta_x, \theta_y)$ to be at least partially separated.

Particularly for the spectrometer device 130 being configured for the angular distribution $\Theta_C(\theta_x, \theta_y)$ and the angular distribution $\Theta_I^*(\theta_x, \theta_y)$ to be at least separated, less than 50%, 40%, 30%, 20%, 10% or 0% of the angular distribution $\Theta_C(\theta_x, \theta_y)$ may overlap the angular distribution $\Theta_I^*(\theta_x, \theta_y)$. The spectrometer device 130 may be configured for the angular distribution $\Theta_C(\theta_x, \theta_y)$ and the angular distribution $\Theta_I^*(\theta_x, \theta_y)$ to be at fully separated.

The overlap $F_{C,I*}^{overlap}$ of the angular distribution $\Theta_C(\theta_x, \theta_y)$ and the angular distribution $\Theta_I^*(\theta_x, \theta_y)$ may be obtained by

$$F_{C,I*}^{overlap} = \frac{\int \Theta_C(\theta_x,\theta_y)\cdot\Theta_I^*(\theta_x,\theta_y)\, d\theta_x d\theta_y}{\int \Theta_C(\theta_x,\theta_y)d\theta_x d\theta_y\cdot\int \Theta_I^*(\theta_x,\theta_y)\, d\theta_x d\theta_y}.$$

The light emitting element 138 may be configured for illuminating a defined illumination area on the sample interface 132. The optical element 152 may be configured for directing the illumination light 140 of the light emitting element 138 towards the sample interface 132. Particularly, thereby, the optical element 152 may define the illumination area.

The light emitting element 138 may be at least one of:

- a thermal radiator;
- a microelectromechanical system (MEMS)-based emitter;
- a laser, specifically a vertical cavity surface emitting laser (VCSEL), particularly emitting at least one wavelength in the infrared region;
- a light-emitting diode (LED), particularly

  ∘ a LED emitting light that is at least partially located in the infrared spectral range and/or
  ∘ a LED illuminating a phosphor for light-conversion of light generated by the LED, wherein the luminescent material generates converted light that is at least partly located in the near-infrared spectral range.

The illumination light 140 may have a spectral range at least partially located in the near-infrared spectral range, specifically in the spectral range from 1 to 3 $\mu$m, preferably from 1.3 to 2.5 $\mu$m, more preferably from 1.5 to 2.2 $\mu$m.

The spectrometer device 130 may comprise at least one optical element 152 arranged in a manner that the spectrometer device 130 for the angular distribution $\Theta_C(\theta_x, \theta_y)$ and the angular distribution $\Theta_I^*(\theta_x, \theta_y)$ may be at least partially separated. In the exemplary spectrometer device depicted in Figure 4, the optical element 152 is disposed in a beam path of the illumination light 140. Alternatively or in addition, the optical element 152 may be disposed in a beam path of the detection light 142. It should be appreciated that a spectrometer device 130 according to the present invention may comprise a plurality of optical elements 152, such as an optical element 152 and a further optical element 152. The different optical elements 152 may serve different contexts, such as directing and/or modifying the illumination light 140 or directing and/or modifying the detection light 142.

The optical element 152 may be or may comprise one or more optical mirrors 154; one or more optical lenses 156; one or more active optical elements 158, specifically one or more micro mirror arrays; one or more beam splitters 160. The one or more optical mirrors 154 may be at least one of: one or more flat mirrors; one or more imaging mirrors. The one or more imaging mirror may be at least one of: one or more curved mirrors; one or more free form mirrors.

The spectrometer 130 may comprise a spectrometer window 146, wherein the detection light 142 and the illumination light 140 are transmitted through the spectrometer window 146. The spectrometer window 146 may comprise an outer surface 148 that is facing the outside of the spectrometer device 130. The spectrometer window 146 may comprise an inner surface 150 that facing the inside of the spectrometer device 130. The outer surface 148 may be opposite of the inner surface 150. The outer surface 148 may be configured for being in contact with the object 110 during the spectral measurement and, thereby, being used as the sample interface 132.

The detector 144 may be configured for having an imaging plane for receiving the detection light from the sample interface 132. The optical element 152 and/or a further optical element 152 may be configured for directing and/or focusing the imaging plane of the detector 144 on the sample interface 132.

The spectrometer device 130 may be further comprising at least one evaluation unit 161, wherein the evaluation unit is configured for evaluating the detector signal for obtaining the item of spectral information on the object.

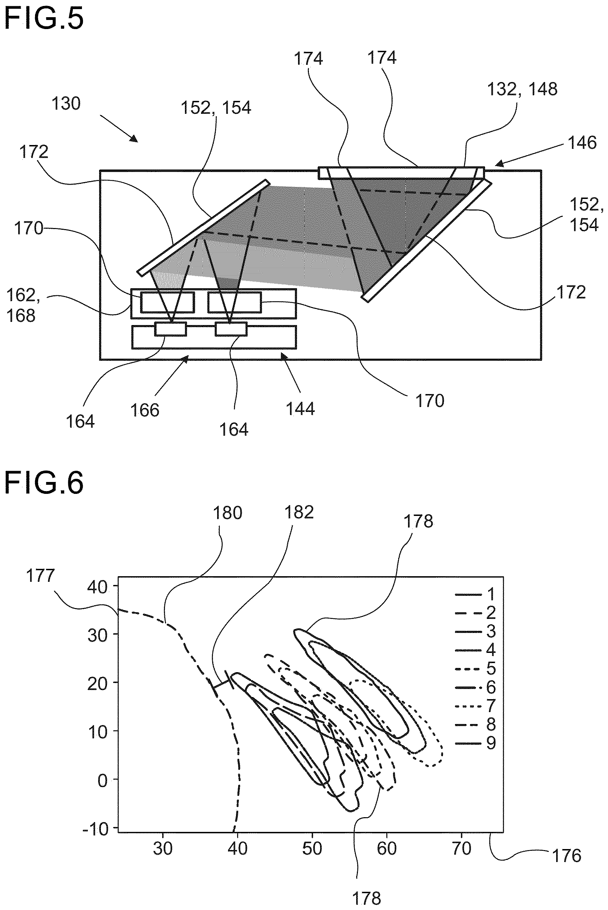

In Figure 5, a further exemplary spectrometer device 130 according to the present invention is depicted. Insofar as no deviating information is given, the reference numbers as discussed in the above denote the same respective components. As may be derived from Figure 5, the detector 144 may comprise a plurality of photosensitive elements 164 (also depicted in Figure 4), wherein each of the photosensitive elements 164 may be configured for generating at least one detector signal for deriving the spectral information. The plurality of photosensitive elements 164 may be arranged in an array 166. The plurality of photosensitive elements 164 may be sensitive to differing wavelength intervals.

The spectrometer device 130 further may comprise at least one wavelength-selective element 162. The wavelength-selective element 162 of the exemplary spectrometer device 130 of Figure 5 is disposed in a beam path of the detection light 142. Alternatively or in addition, The wavelength-selective 162 element may be disposed in a beam path of the illumination light 140 (not depicted in Figure 5).

The wavelength-selective element 162 may be selected from the group of a tunable wavelength-selective element and a wavelength-selective element having a fixed transmission spectrum. The wavelength-selective element 162 may be or may comprise at least one of: a length variable filter 168 (as depicted in Figure 5); a static filter; a tunable filter, particularly a MEMS Fabry-Perot cavity; an optical lens; a diffractive element. The length variable filter 168 may comprise at least two bandpass filters 170, wherein each bandpass filter 170 may be arranged in a field of view 172 of a specific photosensitive element 164, wherein each bandpass 170 filter may be configured for selecting at least one wavelength range of the detection light 142.

The plurality of photosensitive elements 164 may each have a field of view 172, wherein an optical element 152 may be configured for modifying the field of view 172 of at least one photosensitive element 164 in order to increase at least one overlap between at least two field of views 172 of the plurality of photosensitive elements 164. The photosensitive elements 164 may each have a measurement spot 174 on the sample interface 132, wherein increasing the at least one overlap between the at least two field of views 172 of the plurality of photosensitive elements 164 may result in an increased at least one overlap area comprising the measurement spots 174 of the at least two field views 170 on the sample interface 132. A ratio between the at least one overlap area comprising the measurement spots 174 of the at least two field of views 172 and a combined area comprising the measurement spots 174 of the at least two field of views 172 on the sample interface 132 may be at least 60 %, 70 %, 80 % or 90 %.

The wavelength-selective element 162 may be configured and/or arranged in a manner that at least two photosensitive elements 164 of the plurality of photosensitive elements 164 may be exposed to an individual, specifically differing, spectral range of detection light from the object.

In Figure 6, several exemplary several 10% contours of angular distribution $\Theta(\theta_x, \theta_y)$ of angles $\theta_x$, $\theta_y$ on the sample interface 132 are illustrated. On the horizontal axis 176, the angle $\theta_x$ in ° is depicted. On the vertical axis 177, the angle $\theta_y$ in ° is depicted. The respective contour of the angular distribution $\Theta_I^*(\theta_x, \theta_y)$ of the Specular Fresnel reflected light is denoted with reference number 180. Further, the respective contour of several angular distributions $\Theta_C^i(\theta_x, \theta_y)$ (some of them denoted with the reference numbers 178) are depicted. For the sake of clarity not all angular distribution $\Theta_C^i(\theta_x, \theta_y)$ are denoted by using reference number 178. It is thus emphasized that any angular distribution $\Theta_C^i(\theta_x, \theta_y)$ is further indicated by using a number between 1 to 9 that is depicted in Figure 6. Each angular distribution $\Theta_C^i(\theta_x, \theta_y)$ is assigned to a specific photosensitive element 164 of the detector 144. The angular distribution $\Theta_C(\theta_x, \theta_y)$ of the detector 144 may comprise any one of the angular distribution $\Theta_C^i(\theta_x, \theta_y)$.

As may be derived from Figure 6, the angular distribution $\Theta_C(\theta_x, \theta_y)$ and the angular distribution $\Theta_I^*(\theta_x, \theta_y)$ may be fully separated (as depicted). When the angular distribution $\Theta_C(\theta_x, \theta_y)$ and the angular distribution $\Theta_I^*(\theta_x, \theta_y)$ may be fully separated, a minimal distance 182 between the angular distribution $\Theta_C(\theta_x, \theta_y)$ and the angular distribution $\Theta_I^*(\theta_x, \theta_y)$ may be below 1°, 5° or 10°.

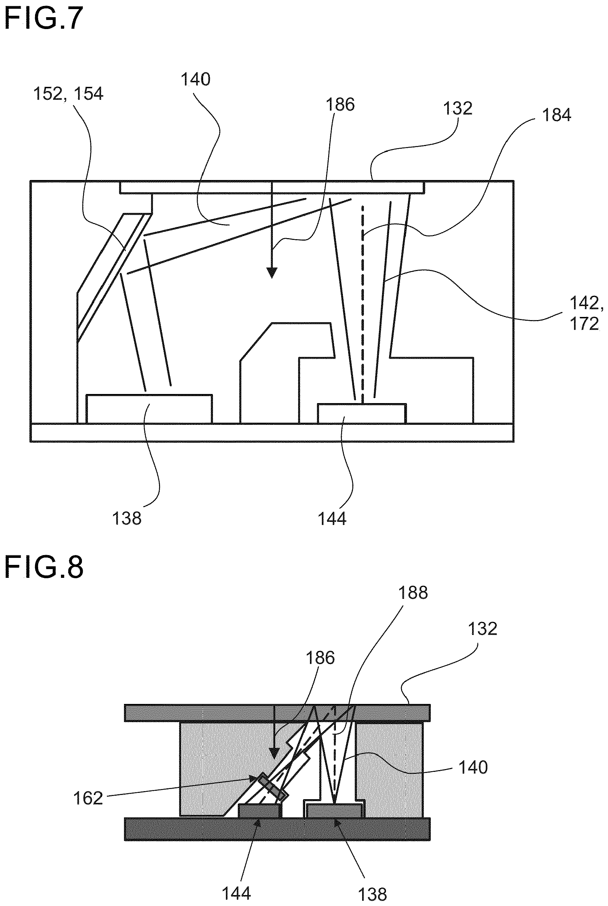

In Figure 7, a further exemplary spectrometer device 130 according to the present invention is depicted. Insofar as no deviating information is given, the reference numbers as discussed in the above denote the same respective components. The optical element 152 of the further exemplary spectrometer device 130 is disposed in the beam path of the illumination light 140. Regardless of this, typically, an angle between a center ray 184 of a field of view 172 of the detector 144 an a normal 186 of the sample interface 132 at the sample interface 132 may be less than 15°, 10°, 5°, 4°, 3°, 2°, 1° degree. Alternatively, as depicted for the further exemplary spectrometer device 130 in Figure 7, the center ray 184 and the normal 186 of the sample interface 132 at the sample interface 132 may be parallel.

In Figure 8, a further exemplary spectrometer device 130 according to the present invention is depicted.

Insofar as no deviating information is given, the reference numbers as discussed in the above denote the same respective components. Further typically, an angle between a center light ray 188 of a bundle of the illumination light 140 incident on the sample interface 132 and a normal 186 of the sample interface 132 at the sample interface 132 may be less than 5°, 4°, 3°, 2°, 1° degree. Alternatively, as depicted for the further exemplary spectrometer device 130 in Figure 8, the center light ray 188 of a bundle of the illumination light 140 incident on the sample interface 132 and a normal 186 of the sample interface 132 of the sample interface 132 may be parallel.

In Figure 9, the angles $\theta_x$, $\theta_y$ and $\theta_C$ are depicted. As may be derived from the lower right coordinate system, the angle $\theta_c$ (denoted by reference number 190) is defined between a nominate light ray $\vec{a} = (a_x, a_y, 1)$ (denoted by reference number 192) of the light described by the respective angular distribution and a normal $\vec{n} = (0, 0, 1)$ (denoted by reference number 186) of the sample interface 132. The angle $\theta_c$ may be derived by using the equation

$$\theta_c = \arccos \frac{\vec{n} \cdot \vec{a}}{|\vec{n}| \cdot |\vec{a}|}.$$

As may be derived from the lower left coordinate system, the angle $\theta_x$ (denoted by reference number 194) is defined between a nominate light ray $\vec{a} = (a_x, a_y, 1)$ (denoted by reference number 192) of the light described by the respective angular distribution projected onto an x-z-axis and a normal $\vec{n} = (0, 0, 1)$ (denoted by reference number 186) of the sample interface 132 projected onto an x-z-axis. The length $a_x$ is denoted by reference number 196. The angle $\theta_x$ may be derived by using the equation

$$\theta_x = \arctan \frac{a_x}{|\vec{n}|}.$$

As may be derived from the upper coordinate system, the angle $\theta_y$ (denoted by reference number 198) is defined between a nominate light ray $\vec{a} = (a_x, a_y, 1)$ (denoted by reference number 192) of the light described by the respective angular distribution projected onto an y-z-axis and a normal $\vec{n} = (0, 0, 1)$ (denoted by reference number 186) of the sample interface 132 projected onto an y-z-axis. The length $a_y$ is denoted by reference number 200. The angle $\theta_y$ may be derived by using the equation

$$\theta_y = \arctan \frac{a_y}{|\vec{n}|}.$$

A method for operating a spectrometer device 130 for obtaining spectral information on at least one object is further disclosed (not depicted), wherein the method comprises using a spectrometer device 130 for obtaining the spectral information as disclosed elsewhere herein.

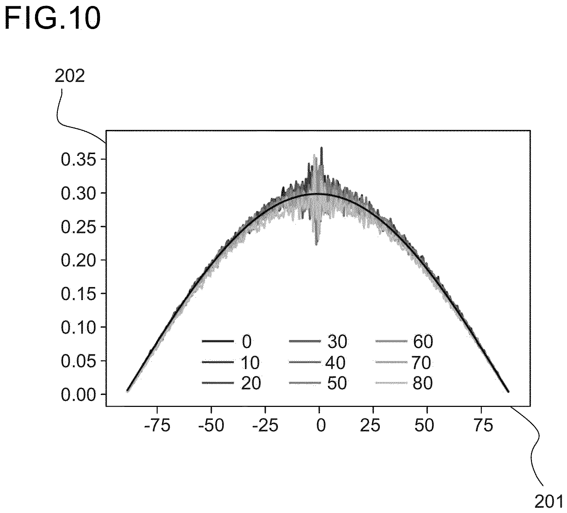

Figure 10 shows the dependency of the radiant intensity on the scattering angle between the illumination light 140 an the reflected detection light 142 for an object 110 of a Lambertian type. On the horizontal axis 201, the scattering angle in ° is depicted. On the vertical axis 202, the radiant intensity in Watt per Steradian (W/sr) is depicted. The different line styles used in Figure 10 shows the further dependency on the angle of incidence of the illumination light 140. The angle of incidence is denoted in the legend of the Figure 10.

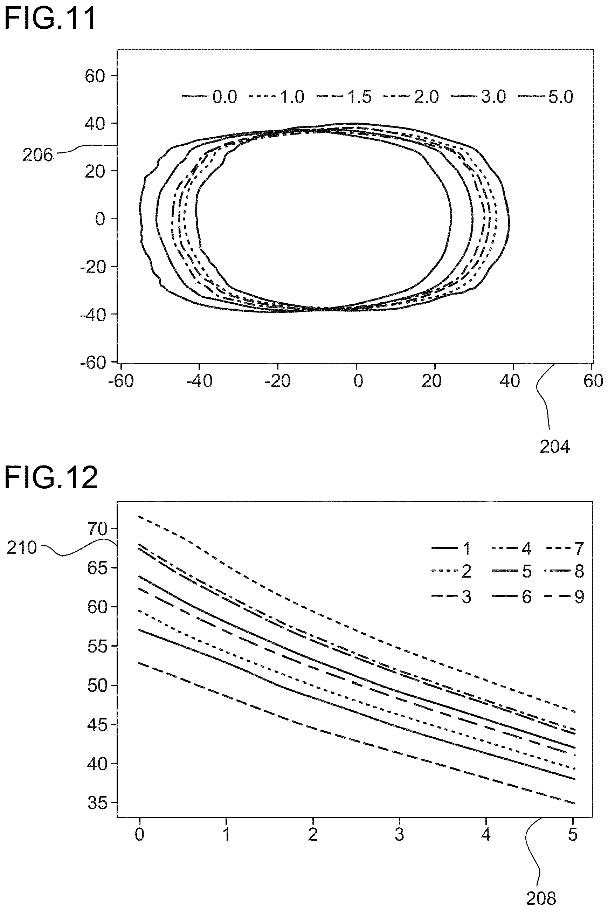

Figure 11 shows several 10% contours of angular distributions $\Theta_I^*\left(\theta_x, \theta_y\right)$ of the Specular Fresnel reflected light on the sample interface 132 depending on the angle between the normal 149 of the outer surface 148 and the normal 151 of the inner surface 150 that is illustrated in the legend of Figure 11. On the horizontal axis 204, the angle $\theta_x$ in ° is depicted. On the vertical axis 206, the angle $\theta_y$ in ° is depicted.

Figure 12 shows the dependency of a viewing angle on the angle between the normal of the normal 149 of the outer surface 148 and the normal 151 of the inner surface 150. The different line style indicate different photosensitive elements that are denoted in the legend of Figure 12. On the horizontal axis 204, the angle between the normal 149 of the outer surface 148 and the normal 151 of the inner surface 150 in ° is depicted. On the vertical axis 210, the viewing angle between 33 and 74 in ° is depicted.

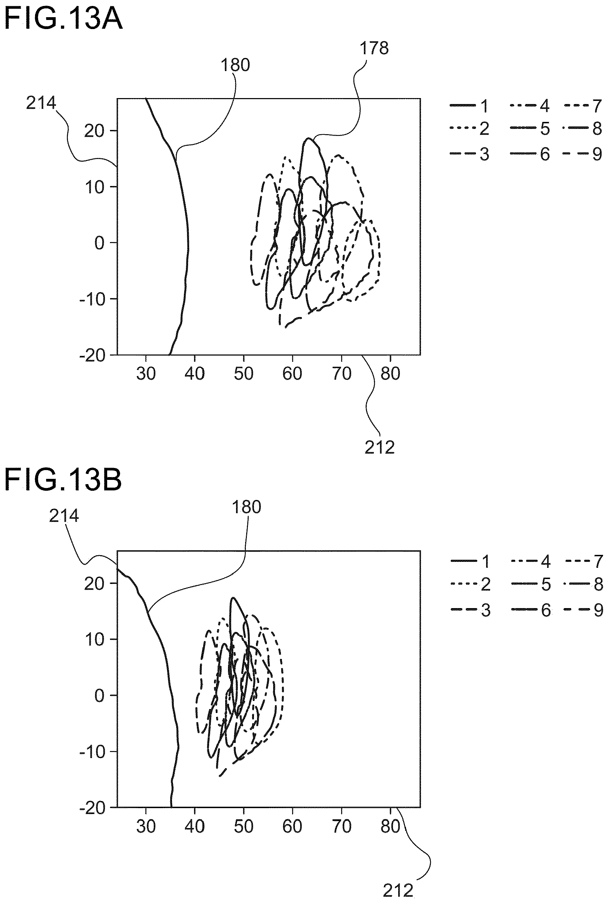

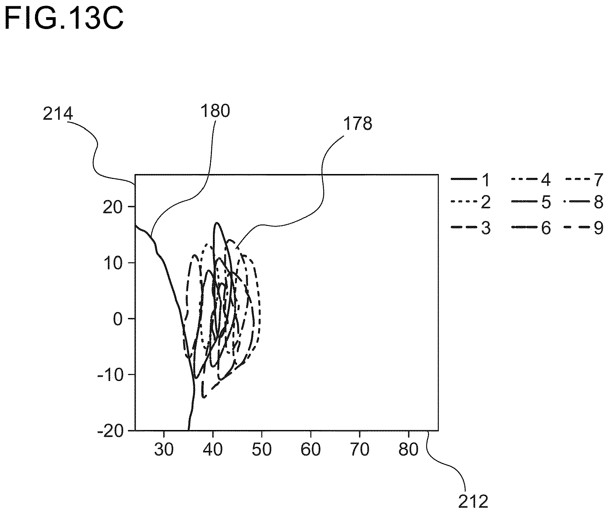

Figures 13 shows several 10% contours of angular distribution $\Theta(\Theta_x, \theta_y)$ on the sample interface 132 are illustrated depending on the angle between the normal 149 of the outer surface 148 and the normal 151 of the inner surface 150. The angular distributions $\Theta(\theta_x, \theta_y)$ correspond to the angular distributions $\Theta(\theta_x, \theta_y)$ shown in Figure 6 to which reference is made. On each horizontal axis 212, the angle $\theta_x$ in ° is depicted. On each vertical axis 214, the angle $\theta_y$ in is depicted.

Figure 13a shows the several 10% contours of angular distribution $\Theta(\theta_x, \theta_y)$ for an angle between the normal 149 of the outer surface 148 and the normal 151 of the inner surface 150 of 0°. Figure 13b shows the several 10% contours of angular distribution $\Theta(\theta_x, \theta_y)$ for an angle between the normal 149 of the outer surface 148 and the normal 151 of the inner surface 150 of 3°. Figure 13c shows the several 10% contours of angular distribution $\Theta(\theta_x, \theta_y)$ for an angle between the normal 149 of the outer surface 148 and the normal 151 of the inner surface 150 of 5°.

List of reference numbers

**[0154]**

| | |
|---|---|
| 110 | object |
| 112 | diffuse Fresnel reflected light |

114 specular Fresnel reflected light
116 volume reflected light
118 refractive effect
120 diffractive effect
122 attenuation coefficient k
123 recorded reflection spectrum
124 horizontal axis
125 horizontal axis
126 vertical axis
127 vertical axis
128 legend
130 spectrometer device
132 sample interface
133 device window
134 x-axis
135 z-axis
136 y-axis
138 light emitting element
140 illumination light
142 detection light
144 detector
146 spectrometer window
148 outer surface
149 normal
150 inner surface
151 normal
152 optical element
153 angle between the normal of the outer surface and the normal of the inner surface
154 optical mirror
156 optical lens
158 active optical element
160 beam splitter
161 evaluation unit
162 wavelength-selective element
164 photosensitive element
166 array
168 length variable filter
170 bandpass filter
172 field of view
174 measurement spot
176 horizontal axis
177 vertical axis
178 angular distribution $\Theta_C^i(\theta_x, \theta_y)$ assigned to a specific photosensitive element
180 angular distribution $\Theta_I^*(\theta_x, \theta_y)$ of the Specular Fresnel reflected light
182 minimal distance
184 center ray
186 normal
188 center light ray
190 angle $\theta_c$
192 light ray
194 angle $\theta_x$
196 length $a_x$
198 angle $\theta_y$

200 length $a_y$
201 horizontal axis
202 vertical axis
204 horizontal axis
206 vertical axis
208 horizontal axis
210 vertical axis
212 horizontal axis
214 vertical axis

**Claims**

1. A spectrometer device (130) for obtaining at least one item of spectral information on at least one object (110) by spectral measurement, wherein the spectrometer device (130) comprises:

   (1) at least one sample interface (132), wherein the sample interface (132) defines a measurement surface, wherein the measurement surface is configured for defining a measurement pose of the object (110);
   (2) at least one light emitting element (138), wherein the light emitting element (138) is configured for emitting illumination light (140) for illuminating the at least one object (110) in order to generate detection light (142) from the at least one object (110);
   (3) at least one detector (144), wherein the detector (144) is configured for generating at least one detector signal when receiving the detection light (142) from the object (110) in order to acquire the item of spectral information;
   (4) at least one spectrometer window (130), wherein the detection light (142) and the illumination light (140) are transmitted through the spectrometer window (130), wherein spectrometer window (130) comprises an outer surface (148) that is facing the outside of the spectrometer device (130); wherein the spectrometer window (130) further comprises an inner surface (150) that facing the inside of the spectrometer device (130), wherein the outer surface (148) is opposite of the inner surface (150), wherein a normal of the outer surface (148) and a normal of the inner surface (150) are tilted.

2. The spectrometer device (130) according to the preceding claim, wherein, for the normal of the outer surface (148) and the normal of the inner surface (150) being tilted, an angle between the normal of the outer surface (148) and the normal of the inner surface (150) is between 0.5° and 10°, more specifically 0.5° and 5°.

3. The spectrometer device (130) according to any one of the preceding claims, wherein the refractive index of the spectrometer window (130) is above 1, specifically above 1.2, more specifically above 1.4.

4. The spectrometer device (130) according to any one of the preceding claims, wherein the refractive index of the spectrometer window (130) is below 6, specifically below 5, more specifically below 4.

5. The spectrometer device (130) according to any one of the preceding claims, wherein the of the spectrometer window (130) is or comprises at least one of:

    - silicon;
    - fused silica;
    - an optical glass ;
    - a synthetic material and/or plastic material.

6. The spectrometer device (130) according to any one of the preceding claims, wherein the spectrometer window (130) has a wedge shaped cross-section, wherein the outer surface (148) and the inner surface (150) are convergent surfaces of the wedge.

7. The spectrometer device (130) according to any one of the preceding claims, wherein the outer surface (148) has a saw tooth shaped cross section in a manner that the outer surface (148) acts as a Fresnel lens.

8. The spectrometer device (130) according to any one of the preceding claims, wherein the spectrometer window (130) comprises a meta lens.

9. The spectrometer device (130) according to any one of the preceding claims, wherein the spectrometer window (130) comprises an optical system that is used as a Fresnel lens.

10. The spectrometer device (130) according to any one of the preceding claims, wherein the incident illumination light (140) shows an angular distribution $\Theta_I(\theta_x, \theta_y)$ on the sample interface (132) causing an angular distribution $\Theta_I^*\left(\theta_x, \theta_y\right)$ of Specular Fresnel reflected light on the sample interface (132), wherein the detection light (142) received by the detector (144) shows an angular distribution $\Theta_C(\theta_x, \theta_y)$ on the sample interface (132), wherein the spectrometer device (130) is configured for the angular distribution $\Theta_C(\theta_x, \theta_y)$ and the angular distribution $\Theta_I^*\left(\theta_x, \theta_y\right)$ to be at least partially separated, particularly by using at least one optical element for modifying one or more of the angular distribution $\Theta_C(\theta_x, \theta_y)$ and the angular distribution $\Theta_I^*\left(\theta_x, \theta_y\right)$, wherein the measurement surface further defines an x-y- plane and, thereby, defines an x-axis (134) and a y-axis (136), wherein $\theta_x$ is an angle between a projection of a nominated light ray of the light described by the respective angular distribution projected in the x-z-plane and a projection of a normal on the measurement surface in the x-z-plane, wherein $\theta_y$ is an angle between a projection of a nominated light ray of the light described by the respective angular distribution projected in the y-z-plane and a projection of a normal on the measurement surface in the y-z-plane.

11. The spectrometer device (130) according to the preceding claim, wherein the spectrometer device (130) is configured for the angular distribution $\Theta_C(\theta_x, \theta_y)$ and the angular distribution $\Theta_I^*\left(\theta_x, \theta_y\right)$ to be fully separated.

12. The spectrometer device (130) according to any one of the two preceding claims, wherein the spectrometer device (130) comprises at least one optical element arranged in a manner that the spectrometer device (130) for the angular distribution $\Theta_C(\theta_x, \theta_y)$ and the angular distribution $\Theta_I^*\left(\theta_x, \theta_y\right)$ are at least partially separated.

13. The spectrometer device (130) according to any one of the preceding claims, wherein the detector (144) comprises a plurality of photosensitive elements, wherein each of the photosensitive elements is configured for generating at least one detector (144) signal for deriving the spectroscopic information.

14. A mobile device, wherein the mobile communication device comprises a spectrometer device (130) according to any one of the preceding claims.

15. A method for operating a spectrometer device (130) for obtaining spectroscopic information on at least one object (110), wherein the method comprises using a spectrometer device (130) according to any one the preceding claims.

# FIG.1

# FIG.2

FIG.3

# FIG.4

152, 154,
156, 158, 160

# FIG.5

# FIG.6

## FIG.7

## FIG.8

FIG.9

FIG.10

## FIG.11

## FIG.12

## FIG.13A

## FIG.13B

FIG.13C

Europäisches
Patentamt
European
Patent Office
Office européen
des brevets

# EUROPEAN SEARCH REPORT

Application Number

**EP 23 20 5223**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 475 201 A (PIKE JOHN N [US]) 12 December 1995 (1995-12-12) * figures 3, 5, 6 * ----- | 1-5,8-15 | INV. G01J3/02 G01J3/28 G01J3/42 |
| X | US 2020/182688 A1 (JO JEONGGYU [KR] ET AL) 11 June 2020 (2020-06-11) * figures 2A, 3A, 5, 6 * ----- | 1-5, 7-12,14, 15 | G01N21/47 |
| X | EP 3 308 143 B1 (NEO MONITORS AS [NO]) 11 December 2019 (2019-12-11) * figures 1B, 6 * ----- | 1-5, 8-12,14, 15 | |
| X | US 10 298 824 B2 (LG ELECTRONICS INC [KR]) 21 May 2019 (2019-05-21) * figure 1 * ----- | 1-6, 8-12,15 | |

TECHNICAL FIELDS
SEARCHED      (IPC)

G01J
G01N

The present search report has been drawn up for all claims

| Place of search | Date of completion of the search | Examiner |
|---|---|---|
| Munich | 13 March 2024 | Haan, Martine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 5223**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-03-2024**

| Patent document cited in search report | | Publication date | Patent family member(s) | | Publication date |
|---|---|---|---|---|---|
| US 5475201 | A | 12-12-1995 | AU | 667156 B2 | 07-03-1996 |
| | | | CA | 2115624 A1 | 26-08-1994 |
| | | | EP | 0612996 A2 | 31-08-1994 |
| | | | JP | H06288912 A | 18-10-1994 |
| | | | TW | 253917 B | 11-08-1995 |
| | | | US | 5475201 A | 12-12-1995 |
| US 2020182688 | A1 | 11-06-2020 | KR | 20200071423 A | 19-06-2020 |
| | | | US | 2020182688 A1 | 11-06-2020 |
| | | | WO | 2020122603 A1 | 18-06-2020 |
| EP 3308143 | B1 | 11-12-2019 | CA | 2989119 A1 | 15-12-2016 |
| | | | CN | 107850535 A | 27-03-2018 |
| | | | EP | 3308143 A1 | 18-04-2018 |
| | | | JP | 6781248 B2 | 04-11-2020 |
| | | | JP | 2018521330 A | 02-08-2018 |
| | | | KR | 20180017131 A | 20-02-2018 |
| | | | RU | 2017144290 A | 11-07-2019 |
| | | | US | 2018172580 A1 | 21-06-2018 |
| | | | WO | 2016200274 A1 | 15-12-2016 |
| US 10298824 | B2 | 21-05-2019 | KR | 101645495 B1 | 05-08-2016 |
| | | | US | 2018091712 A1 | 29-03-2018 |
| | | | WO | 2016167483 A1 | 20-10-2016 |

EPO FORM P0459

For more details about this annex : see Official Journal of the European Patent Office, No. 12/82

**REFERENCES CITED IN THE DESCRIPTION**

**Patent documents cited in the description**

- WO 2017222618 A